# EUROPEAN PATENT APPLICATION

(11) **EP 0 817 462 A2**
(43) Date of publication of application: **07.01.1998**
(21) Application number: 97110126.6
(22) Date of filing: 20.06.1997
(51) Int. Cl.: H04N 1/32

(54) **Image forming system for selecting optimum type for requested process from plural image forming apparatuses existing on network and image forming process controlling method therefor**

(30) Priority: 28.06.1996 JP 170415/96; 17.06.1997 JP 159651/97
(71) Applicant: KABUSHIKI KAISHA TOSHIBA, Kawasaki-shi, Kanagawa-ken 210 (JP)
(72) Inventor: Masahiko, Taniguchi, 1-1 Shibaura 1-chome,Minato-ku Tokyo 105 (JP); Takefumi, Nosaki, 1-1 Shibaura 1-chome,Minato-ku Tokyo 105 (JP)
(74) Representative: Blumbach, Kramer & Partner

(57) **Abstract**

An image forming system including a first image forming apparatus (500) arranged to form image data into an image and disposed on a network (CB, N), second image forming apparatuses (1,..., 1) arranged to subject image data to a predetermined image process to form an image and disposed on the network, a host computer (600) arranged to control the operation of the system and disposed on the network, and a control function (200, 600, S71 to S83) for receiving a demand to perform a predetermined process and image to be processed, selecting one image forming apparatus from the first image forming apparatus and the second image forming apparatuses in accordance with states of the first image forming apparatus and the second image forming apparatuses and causing the selected image forming apparatus to process the image to be processed to satisfy the demand to perform the predetermined process.

## Description

The present invention relates to an image forming system composed of an image forming apparatus for performing a scanner function, a printer function, a facsimile communication function and an image processing function and a controller connected to the image forming apparatus to control the communication, and to an image forming process control method such that the image forming system is connected to a network to control the image forming process by using a personal computer or a printer on the network.

In recent years, copying machines have been digitized and, in addition to the original copying function with the equal magnification, functions of rotating, enlarging, contracting, synthesizing and storing scanned image data have been realized. By combining the realized functions, a variety of edition functions, such as electronic sorting and a 2in1 function, have been realized. Moreover, the copying machine has been formed into composite type apparatus so that a composite image forming apparatus also having the facsimile communication function has been developed. Since a multiplicity of functions have been provided, the method of controlling the composite image forming apparatus has been complicated.

On the other hand, office equipment has been disposed on a network using personal computers as the major devices thereof. In the above-mentioned trend, the composite image forming apparatus has been required to be a component of a network.

However, if the composite image forming apparatus is connected to a network to form a network system, there arise a multiplicity of problems when the composite image forming apparatus is controlled from the network. When use of a copying machine by a user and a printing operation from the network are attempted to be performed simultaneously, there arise a problem in that the copying operation required by the user is interrupted. Another problem arises in that a copying operation cannot freely be performed. Moreover, a control method for using the composite image forming apparatus as a scanner must be improved. Since the conventional control method must have a complicated control mechanism, the performance of the composite image forming apparatus deteriorates when it is connected to the network as compared with a state where the same is used in a stand alone state.

When a controller is provided for an image forming apparatus to be included in a network so as to control the image forming apparatus from the network, there arises a problem in that the user cannot comfortably use the copying function in a case where use of the copying machine by the user and a printing operation from the network are attempted to be performed simultaneously. Since complicated control mechanisms must be provided when the copying function is required to be used during the facsimile communication and when the image forming apparatus is used as a scanner, the performance of the image forming apparatus deteriorates when the same is connected to the network as compared with the stand along state. Thus, there arises a problem in the each function cannot efficiently be controlled.

When the composite image forming apparatus is included in the network and image data is transmitted from a host apparatus, such as a personal computer, connected to the network, communication is performed only between the host apparatus and the composite image forming apparatus. Since the communication is not performed between the composite image forming apparatuses, the merit of the network system cannot satisfactorily be used.

An object of the present invention is to provide an image forming system and an image forming process control method capable of preventing interruption of use of a copying machine by a user and causing the processing function of each image forming apparatus on a network to be exhibited when the image forming apparatus is connected to the network.

According to one aspect of the present invention, there is provided an image forming system comprising a first image forming apparatus for forming an image in accordance with image data so as to form image; second image forming apparatuses for performing a predetermined image process in accordance with image data so as to form an image; means for establishing a connection among a host computer for controlling an operation of the system and the first image forming apparatus and the second image forming apparatuses; and control means for receiving a demand to perform a predetermined process and image to be processed, selecting one image forming apparatus from the first image forming apparatus and the second image forming apparatuses in accordance with states of the first image forming apparatus and the second image forming apparatuses and controlling the selected image forming apparatus to process the image to be processed corresponding to the predetermined process demand.

The present invention having the above-mentioned structure is able to achieve the objects. That is, when an image supplied from a host computer is processed and printed by a copying machine or a printer on the network, the image forming system according to the present invention is arranged to gather various information items including a state of use and a processing function of each of a plurality of copying machines and printers connected to the network to select an optimum machine in place of the conventional system in which a machine instructed by a user forms an image. If, for example, a 2IN1 process is required, an image forming apparatus having the foregoing function is detected and selected. After the image process is performed, the processed image is printed by another printer or the like on the network. The foregoing operation can automatically be performed without a decision of the user. Therefore, only a simple instruction from the host apparatus is required to perform the image process and/or the printing process while sufficiently using the resource of the network.

When another user is using a copying machine (or a printer), another copying machine, which is not being used, is automatically selected to cause an image process (for example, a 2in1 process) to be performed. As a result, the copying process of the copying machine is not interrupted. Moreover, a user at a host computer or the like who requires an image to be processed is able to use a machine which is not being used so that the process is quickly completed. Since the state of the network is determined in accordance with various information items of the machines on the network, an optimum machine can automatically be selected in consideration of all of the states, including the present state of use of the machines, the quantity of usable paper sheets, the functions of the machines on the network corresponding to the required process, priority to be given to the distance from the user to the position of the machine and the like. Therefore, the resources on the network can sufficiently be used and quick and smooth image process can be performed.

The image forming method according to the present invention causes an image forming system to employ the above-mentioned procedure to gather various information items of the machines connected to the network to automatically select an optimum machine to perform the required process to cause the selected machine to perform the required process. As a result, the resources of the network can smoothly and automatically be used.

The invention can be more fully understood from the following detailed description when taken in conjunction with the accompanying drawings, in which:
FIG. 1 is a block diagram showing the structure of a control system of a composite image forming apparatus relating to an image forming apparatus according to the present invention;
FIG. 2 is a diagram schematically showing the overall structure of a composite image forming apparatus;
FIG. 3 is a diagram showing the structures of a scanner portion and an image processing portion;
FIG. 4 is a diagram showing the structure of a printer portion;
FIG. 5 is a diagram showing the structure of a communication interface portion;
FIG. 6 is a diagram showing the structure of a communication interface portion;
FIG. 7 is a diagram showing the structure of a controller for the composite image forming apparatus;
FIG. 8 is a diagram showing the structure of the communication interface portion;
FIG. 9 is a diagram showing the state of the connection between the composite image forming apparatus and the controller for the composite image forming apparatus;
FIG. 10 is a diagram showing the state of the connection between the composite image forming apparatus and the controller for the composite image forming apparatus;
FIG. 11 is a flow chart of a process for transferring internal information of the composite image forming apparatus;
FIG. 12 is a flow chart of a process for transferring an operation parameter;
FIG. 13 is a flow chart of use of image data;
FIG. 14 is a flow chart of use of image data;
FIG. 15 is a diagram showing a passage for data when the composite image forming apparatus is used as an image conversion server;
FIG. 16 is a diagram showing an example of addition of a function to a network printer using the image conversion server;
FIG. 17 is a diagram showing a load dispersion process;
FIG. 18 is a diagram showing the load dispersion process;
FIG. 19 is a flow chart of the load dispersion process; and
FIG. 20 is a flow chart of the load dispersion process.

An embodiment of the present invention will now be described with reference to the drawings.

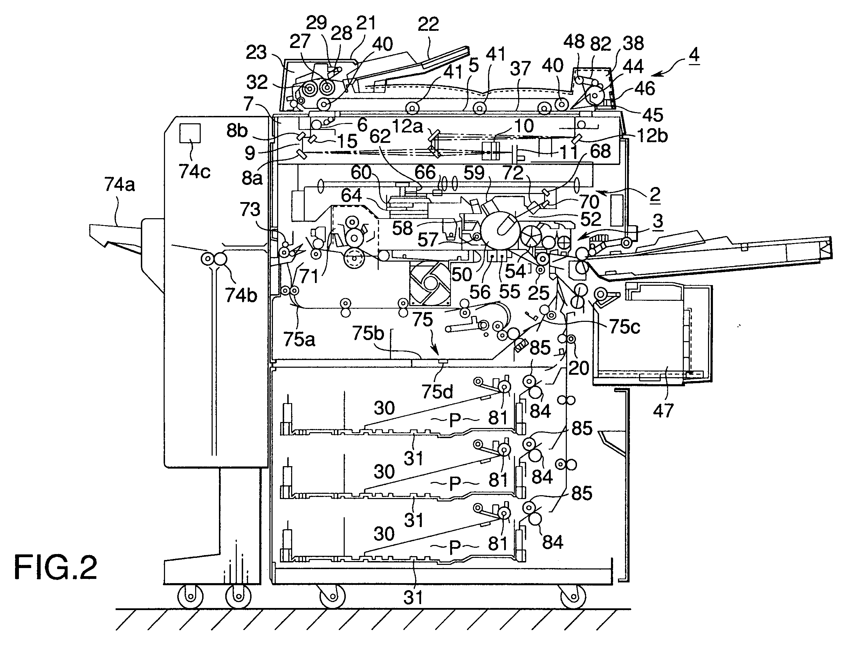

FIG. 2 schematically shows the overall structure of a composite image forming apparatus relating to an image forming apparatus according to the present invention. The composite image forming apparatus 1 has a scanner 2 serving as an image input means and a printer 3 serving as an output means, the composite image forming apparatus 1 being provided with an automatic original-document feeding unit (ADF) 4 in the upper portion thereof.

The automatic original-document feeding unit 4 has a main cover 21 formed into a frame and having a rear end which is attached to a rear end of the upper surface of the composite image forming apparatus 1 by a hinge unit (not shown) in such a manner that the main cover 21 can be opened/closed as desired. Thus, the overall body of the automatic original-document feeding unit 4 can be rotated and moved so as to open the upper surface of an original-document retaining frame 5. An original-document feeding frame 22 capable of collectively holding a plurality of original document sheets is disposed in a somewhat rightward direction above the upper surface of the main cover 21. A feeding means 23 for sequentially, that is, one by one, fetching the original document sheets to supply the sheet to an end (the left-hand end of FIG. 2) of the original-document retaining frame 5 is disposed at an end of the composite image forming apparatus 1. The feeding means 23 has a pickup roller 27 for fetching the original document, a weight plate 28 for pressing the original document to the pickup roller 27, an empty sensor 29 serving as an original document detection sensor for detecting a state where the original document has been set on the original-document feeding frame 22, and so forth. Moreover, a feeding roller 32 is disposed in a direction in which the original document is fetched from the pickup roller 27 so as to reliably feed the original document sheets one by one. An original-document conveying belt 37 for covering the upper surface of the original-document retaining frame 5 is arranged over the upper surface of the original-document retaining frame 5. The original-document conveying belt 37 is a wide endless belt having a white outer surface and arranged between a pair of belt rollers 40, the original-document conveying belt 37 being structured to be capable of moving forwards/reversely by a belt drive mechanism (not shown). The original-document conveying belt 37 has, on the inner side thereof, that is, on the reverse side thereof, a plurality of belt pressing rollers 41 for pressing the surface of the original-document conveying belt 37 against the surface of the original-document retaining frame 5 and a set switch (not shown) for detecting whether the automatic original-document feeding unit 4 has been opened. Thus, the original document feed by the feeding means 23 is conveyed from an end (the left-hand end) of the original-document retaining frame 5 to another end (the right-hand end) of the same. A paper discharge means 38 is disposed in the right-hand side portion of the apparatus, the paper discharge means 38 having a conveying roller 44, a pinch roller 45 for pressing the original document to the conveying roller 44 and a paper discharge sensor 46 serving as an original document detection means for detecting the rear end of the original document which is moved to the paper discharging direction. A paper discharge roller 48 is disposed downstream of the original document discharge passage. Moreover, the original document discharge passage has a gate 82 for turning over the original document and guiding the same to the original-document retaining frame 5. Thus, double-side copying of the original document can be performed. The scanner 2 has a first carriage 7 provided with a lighting lamp 6 serving as a light source and a mirror 15, a second carriage 9 having mirrors 8a and 8b for bending the optical path, a lens 10, a CCD sensor 11 for receiving reflected light, a drive system (not shown) for moving the foregoing units and an A/D conversion portion (not shown) for converting an output from the CCD sensor 11, that is, image data (information) from analog data into digital data. The first and second carriages 7 and 9 are connected to each other by a timing belt (not shown) such that the second carriage 9 is arranged to be moved at speed which is half the speed of the first carriage 7 in the same direction as the direction in which the first carriage 7 is moved. As a result, a scanning operation can be performed in such a manner that the optical path to the lens 10 is made to be constant. The lens 10 has a fixed focal distance and arranged to be moved in the direction of the optical axis when the magnification is attempted to be changed. The CCD sensor 11 has sensor devices each of which corresponds to one pixel of the original document. An output from the CCD sensor 11 is arranged to be supplied to the A/D conversion portion. The movements of the first and second carriages 7 and 9 and the mirrors 12a and 12b are performed by corresponding stepping motors (not shown). The first and second carriages 7 and 9 are arranged to be moved when a timing belt (not shown) arranged between a drive pulley (not shown) and an idle pulley (not shown) connected to a rotational shaft of the stepping motor. The lens 10 has a spiral shaft (not shown) which is rotated by the corresponding stepping motor (not shown) so as to be moved in the direction of the optical axis to follow the spiral movement.

A laser diode 60 is disposed together with corresponding collimator lens 62, a polygonal mirror (polygonal reflecting mirror) 64, a lens 66, reflecting mirrors 68 and 70 and a lens 72 so as to irradiate a photosensitive drum 50 with a laser beam emitted from an exposing unit 52.

The printer 3 is formed by combining, for example, a laser optical system and an electrophotographic method capable of forming an image on transfer paper. That is, the printer 3 has the photosensitive drum 50 rotatively borne by a shaft disposed at substantially the central portion of the apparatus. Around the photosensitive drum 50, there are disposed, in the following sequential order, the exposing unit 52, a developing unit 54, a transfer charger 55, a separating charger 56, a PCC charger 57, a destaticizing charger 58 and an electric charger 59. When a laser beam is emitted from the scanner 2 to form an image of the original document on the surface of the photosensitive drum 50, an electrostatic latent image can be formed.

The electrostatic latent image formed on the photosensitive drum 50 is developed by the developing unit 54 so that a developed image is, by the transfer charger 55, transferred to the surface of copy paper P which is conveyed from a paper feeding cassette 30 serving as a paper feeding means, to be described later, through a paper feeding roller 20 and an aligning roller 25. The copy paper P having the image transferred by the transfer charger 55 is separated by the separating charger 56 using AC corona discharge, and then conveyed to a fixing unit 71 through the conveying belt. The copy paper P having the image melted and thus fixed by the fixing unit 71 is, by a paper discharge roller pair 73, discharged to a unit 74 having a paper discharge tray 74a. The unit 74 has a roller pair 74b for causing the copy paper P discharged from the paper discharge roller pair 73 to face down. Moreover, the unit 74 has, in the upper portion thereof, a stapler 74c for stapling each copy in a staple sorting mode.

Developer left on the surface of the photosensitive drum 50 from which the developed image has been transferred and separated to the copy paper P is cleaned by the PCC charger 57. Moreover, the destaticizing charger 58 makes the potential of the surface of the photosensitive drum 50 to be lower than predetermined level to enable a next copying operation to be performed.

When a double-side copying operation is performed to print images on the two sides of the copy paper P, the copy paper P having the developed image melted and fixed by the fixing unit 71 is conveyed through a conveying passage 75a, and then accumulated on a tray 75b. The sheets of the copy paper P accumulated on the tray 75b and each having an image on one side thereof is conveyed to the transfer charger 55 through a conveying passage 75c so that a developed image is transferred to another side having no image printed thereon. A light reflecting type paper sensor 75d is disposed in the lower portion of the tray 75b to detect whether copy paper P to be stacked on the tray 75b exists.

The conveying passage 75a, the tray 75b, the conveying passage 75c and the paper sensor 75d form an automatic double-side device (ADD) 75 which is an automatic double-side turning over mechanism.

Referring to FIG. 2, reference numeral 30 represents a plurality of paper feeding cassettes vertically and detachably loaded from the front portion of the composite image forming apparatus 1. The paper feeding cassette 30 is formed by a cassette case 31 which is a box for accommodating copy paper P. An end of the cassette case 31 from which the copy paper P is fetched is inclined in the direction in which the copy paper P is fetched. The copy paper P accommodated in the cassette case 31 of the paper feeding cassette 30 is fetched by the pickup roller 81 starting from the uppermost sheet. The sheets of the copy paper P fetched by the pickup roller 81 and introduced into the end of the cassette case 31 from which the copy paper P is fetched are, one by one, separated by a paper feeding roller 84 and a separating roller (or a separating pad) 85 disposed in the upper portion of the inner portion at the end of the cassette case 31 from which the copy paper P is fetched so as to be conveyed toward the printer 3.

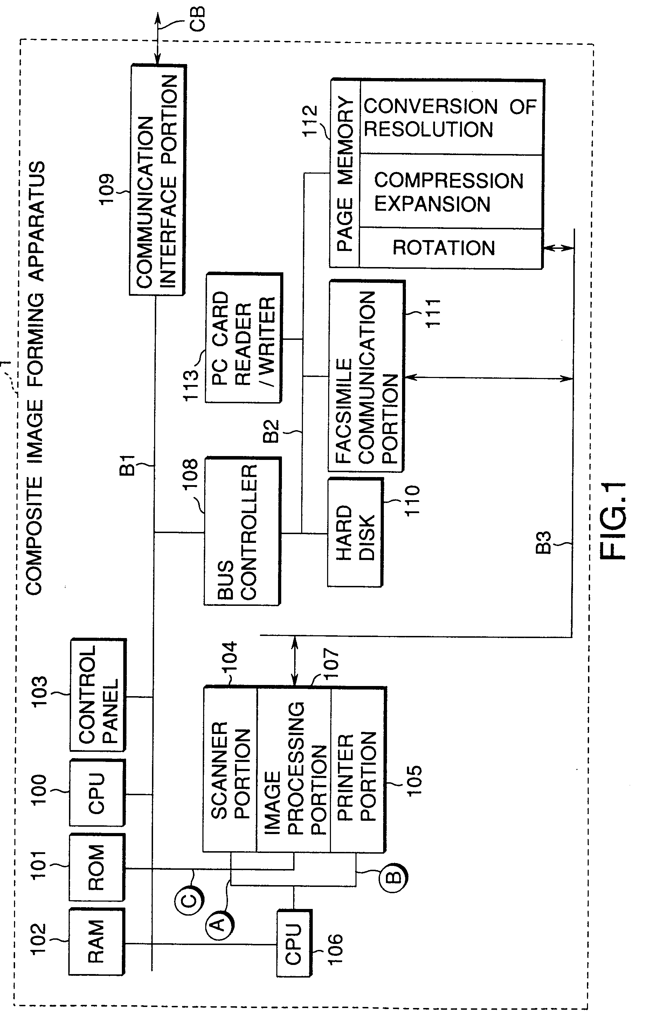

FIG. 1 shows the structure of a control system of the composite image forming apparatus 1 having the scanner function, the printer function and the facsimile function according to this embodiment.

The composite image forming apparatus 1 has a structure in which a CPU 100 for totally controlling the composite image forming apparatus 1, a ROM 101 for storing a control program, a RAM 102 for storing image data, a control panel 103, a CPU 106 for controlling a scanner portion 104 and a printer portion 105, an image processing portion 107, a bus controller 108 and a communication interface portion 109 are connected to one another through a control bus B1 control bus B1. The CPU 100 controls the above-mentioned units.

Moreover, a hard disk 110, a facsimile communication portion 111, a page memory 112 and a PC card reader/writer 113 are connected to the bus controller 108 through a control bus B2. The CPU 100 controls the hard disk 110, the facsimile communication portion 111, the page memory 112 and the PC card reader/writer 113 through the bus controller 108 and the control bus B2.

The image processing portion 107, the printer portion 105, the facsimile communication portion 111 and the page memory 112 communicate image data through an image bus B3. Moreover, also the control bus B2 is structured to communicate image data to the hard disk 110, the page memory 112 and the facsimile communication portion 111.

Moreover, the composite image forming apparatus 1 is able to independently operate the scanner portion 104, the printer portion 105 and the facsimile communication portion 111.

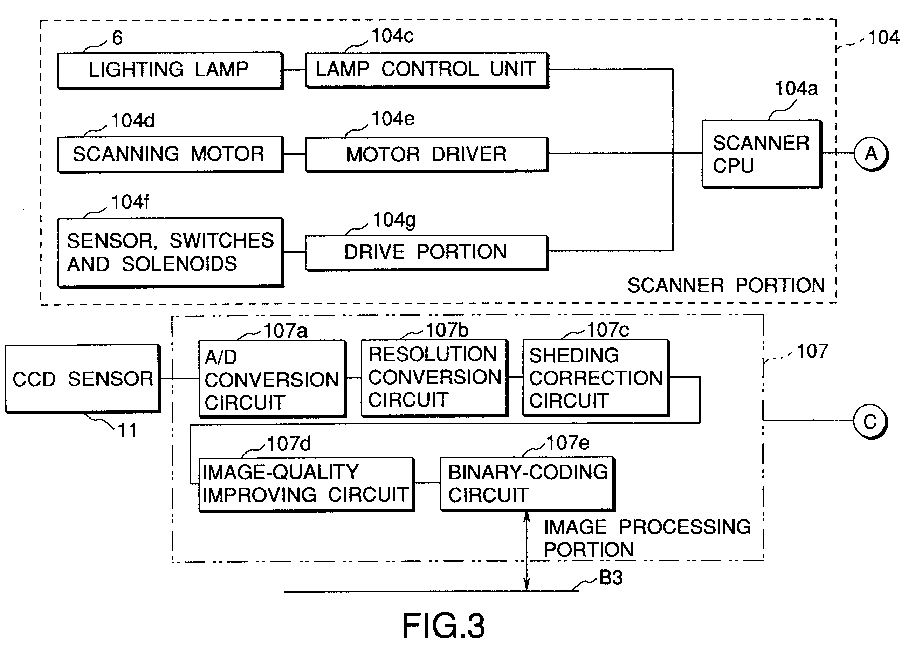

Referring to FIG. 3, detailed structures of the scanner portion 104 and the image processing portion 107 will now be described.

A scanner CPU 104a of the scanner portion 104 is connected to a lamp control unit 104c for controlling the lighting lamp 6, a motor driver 104e for controlling the scanning motor 104d and a drive portion 104g for operating and controlling sensors, switches and solenoids 104f to control the foregoing connected units. The image processing portion 107 is composed of an A/D conversion circuit 107a, a resolution conversion circuit 107b, a shading correction circuit 107c, an image-quality improving circuit 107d and a binary-coding circuit 107e for processing image data supplied from the CCD sensor 11.

Image data read by the CCD sensor 11 is supplied from the binary-coding circuit 107e of the image processing portion 107 to the page memory 112 through the image bus B3 so as to be stored in the page memory 112.

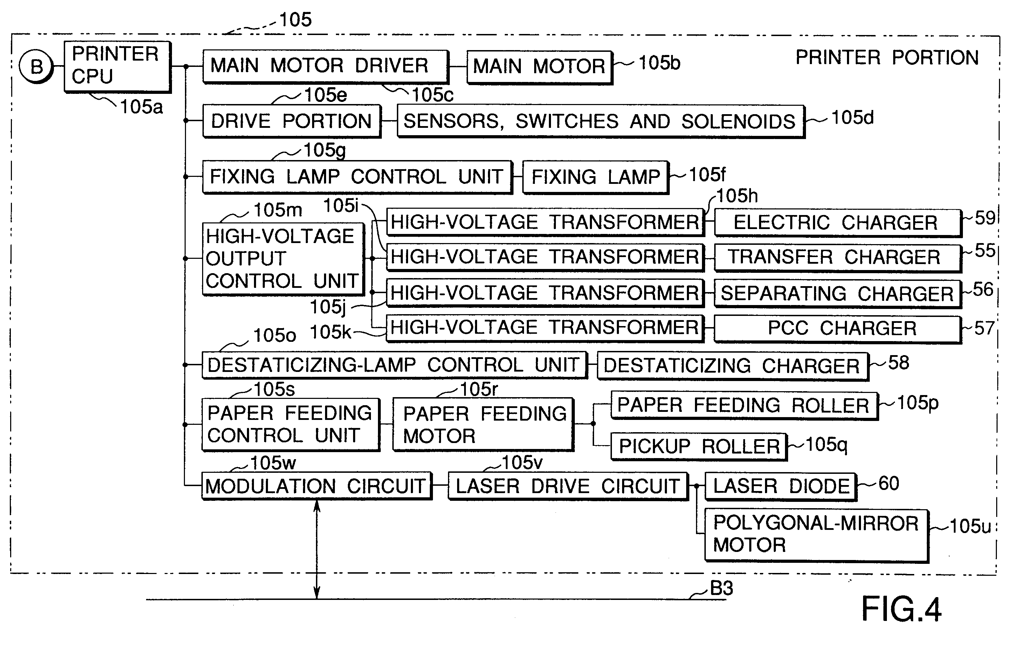

Referring to FIG. 4, the detailed structure of the printer portion 105 will now be described. A printer CPU 105a of the printer portion 105 is connected to a main motor driver 105c for rotating a main motor 105b, a drive portion 105e for operating and controlling sensors, switches and solenoids 105d, a fixing lamp control unit 105g for controlling a fixing lamp 105f, a high-voltage output control unit 105m for controlling an electric charger 59 connected through a high-voltage transformer 105h, a transfer charger 55 connected through a high-voltage transformer 105i, a separating charger 56 connected through a high-voltage transformer 105j and a PCC charger 57 connected through a high voltage transformer 105k, a destaticizing-lamp control unit 105o for controlling the destaticizing charger 58, a paper feeding control unit 105s for controlling a paper feeding motor 105r for rotating a paper feeding roller 105p and a pickup roller 105q and a modulation circuit 105w for operating a laser drive circuit 105v for operating the laser diode 60 and the polygonal-mirror motor 105u so as to control the connected units.

In the printer portion 105 having the above-mentioned structure, image data supplied from the page memory 112 through the image bus B3 is printed on a predetermined paper sheet under control of the printer CPU 105a.

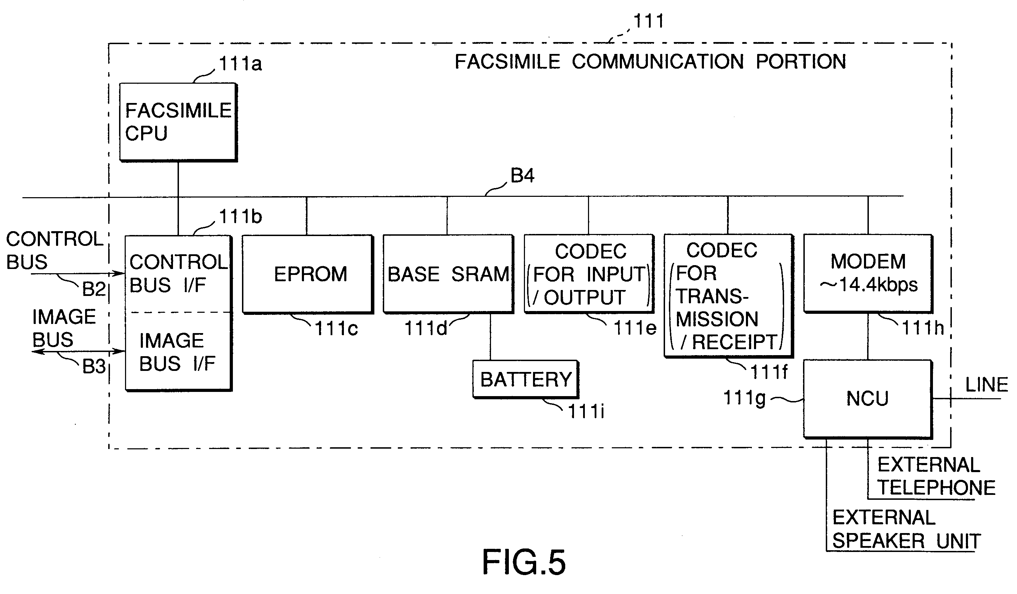

Referring to FIG. 5, the detailed structure of the facsimile communication portion 111 will now be described.

A facsimile CPU 111a of the facsimile communication portion 111 is connected to an interface control circuit 111b composed of a control bus interface (I/F) and an image bus interface (I/F), a memory 111c storing a control program, a memory (a basic SRAM) 111d backed up by a battery 111i to store image data, a CODEC (for input/output) 111e for compressing/expanding image data when image data is input/output, a CODEC (for transmitting/receiving) 111f for compressing/expanding image data when image data is transmitted/received and a modem 111h connected to a communication line to modulate/demodulate data so as to transmit/receive data through a NCU (Network Control Unit) 111g for controlling, for example, a public telephone line so as to control the connected units.

In the facsimile communication portion 111 having the above-mentioned structure, image data supplied through the page memory 112 and the image bus B3 is subjected to processes, such as a compressing process, to output processed data to the communication line. Moreover, image data received through the communication line is subjected to processes, such as an expanding process, to transmit processed data to the page memory 112 through the image bus B3 so as to be temporarily stored in the page memory 112.

The page memory 112 will now be described. The page memory 112 has a multiplicity of DRAMs to store and edit image data. The control bus B2 and the image bus B3 are connected to the page memory 112 so that image data is read/written to and from the page memory 112 through the buses B2 and B3. Moreover, image data on the page memory 112 can be subjected to image processes, such as rotation, compression, expansion, synthesis and conversion of the resolution of images, on the page memory 112.

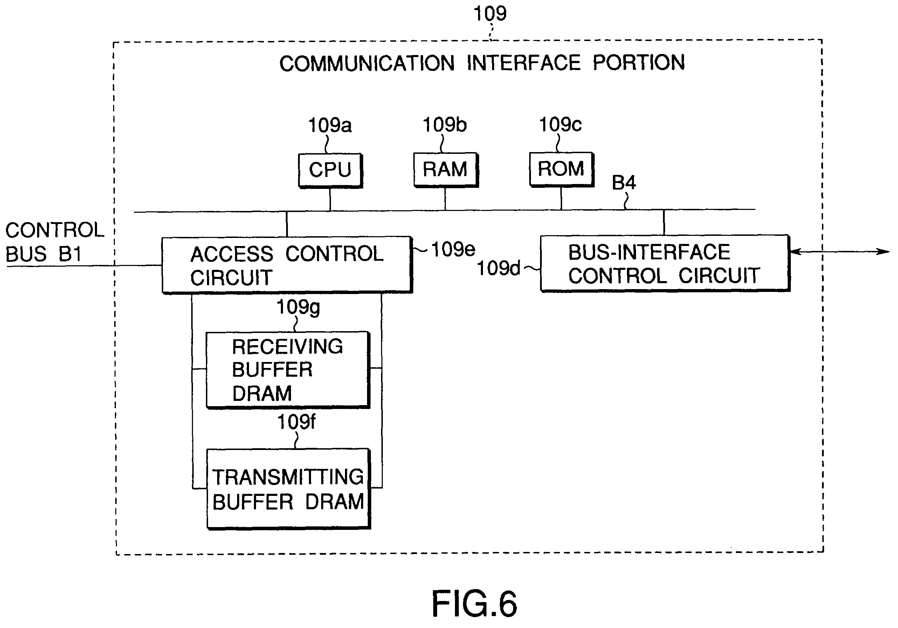

Referring to FIG. 6, the detailed structure of the communication interface portion 109 will now be described. In the communication interface portion 109, a CPU 109a for controlling a communication interface with outside, a ROM 109c storing programs, a RAM 109b on which the program is executed, a bus-interface control circuit 109d and an access control Circuit 109e are connected to one another through a control bus B4 so as to be controlled.

The bus-interface control circuit 109d follows a commands issued from the CPU 109a to maintain the connection of a circuit with the outside and to input/output information, such as status of transmission/receipt and that of transference. A DRAM (Dual Port RAM) 109f for transmitting data, a buffer DRAM (Dual Port RAM) 109g for receiving data and the control bus B1 are connected to the access control circuit 109e.

The CPU 100 of the composite image forming apparatus 1 makes an access to the transmitting buffer DRAM 109f and the receiving buffer DRAM 109g through the control bus B1. The CPU 109a of the communication interface portion 109 makes an access to the transmitting buffer DRAM 109f and the receiving buffer DRAM 109g through the control bus B4. Since DRAMs are employed, conflict of accesses can be prevented.

A controller 200 for the composite image forming apparatus connected to the communication interface portion 109 of the composite image forming apparatus 1 will now be described.

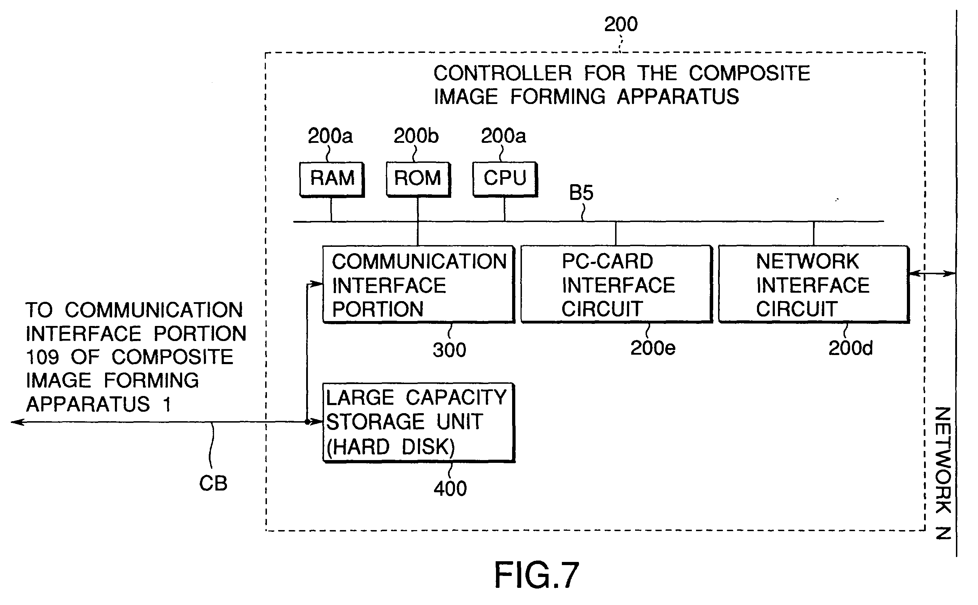

FIG. 7 schematically shows the structure of the controller 200 for the composite image forming apparatus 1.

In the controller 200 for the composite image forming apparatus 1, a CPU 200a for totally controlling the controller 200 for the composite image forming apparatus 1, a ROM 200b storing a control program, a RAM 200c on which the control program is executed, a network interface circuit 200d, a PC-card interface circuit 200e and a communication interface portion 300 are connected to one another through a control bus B5.

The structure of the communication interface portion 300 of the controller 200 for the composite image forming apparatus 1 is the same as the communication interface portion 109 of the composite image forming apparatus 1.

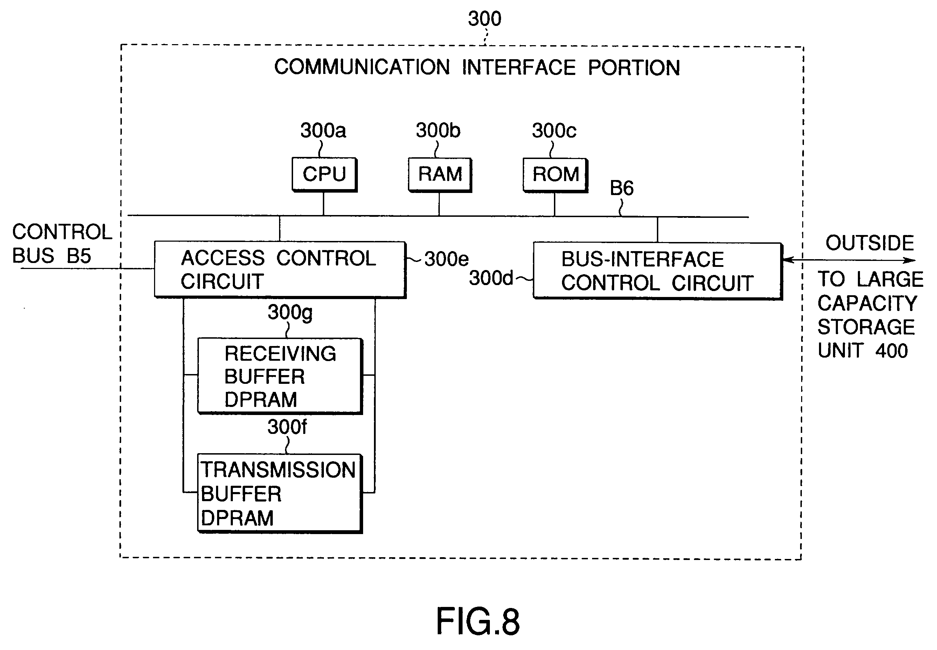

FIG. 8 shows the structure of the, communication interface portion 300. In the communication interface portion 300, a CPU 300a for controlling the communication interface with the outside, a ROM 300c storing programs, a RAM 300b on which the program is executed, a bus-interface control circuit 300d and an access control circuit 300e are connected to one another through a control bus B6 so as to be controlled.

The bus-interface control circuit 300d follows a command issued from the CPU 300a to maintain the connection of the line with the outside and to input/output information, such as status of transmission/receipt and that of transference. A transmission buffer DPRAM 300f, a receiving buffer DPRAM 300g and a control bus B5 are connected to the access control circuit 300e.

The CPU 200a of the controller 200 for the composite image forming apparatus 1 makes an access to the transmission buffer DPRAM 300f and the receiving buffer DPRAM 300g through the control bus B5. The CPU 300a of the communication interface portion 300 makes an access to the transmission buffer DPRAM 300f and the receiving buffer DPRAM 300g through the control bus B6. Since DRAMs are employed, conflict of accesses can be prevented.

Since the communication interface portions 109 and 300 having the same structures are employed, the same programs can be used so as to be stored in the ROM 109c of the communication interface portion 109 and the ROM 300c of the communication interface portion 300. Therefore, the program can be executed in a unified manner by the CPU 100 of the composite image forming apparatus 1 and the CPU 200a of the controller 200 for the composite image forming apparatus 1.

The communication interface portion 300 is, by a daisy chain, connected to a large-capacity storage unit 400 in the controller 200 for the composite image forming apparatus 1 through a cable CB. Also an interface for establishing the connection between the controller 200 for the composite image forming apparatus 1 and the outside (the communication interface portion 109 of the composite image forming apparatus 1) is connected to the communication interface portion 300 and the large-capacity storage unit 400 by a daisy chain.

The concept of the communication interface will now be described.

The communication interface for connecting the composite image forming apparatus 1, the large-capacity storage unit 400 and the controller 200 for the composite image forming apparatus 1 can be connected by a daisy chain. Moreover, the structure of the communication interface according to the present invention can be formed into a multi-master structure. The CPU 109a of the communication interface portion 109 of the composite image forming apparatus 1 and the CPU 300a of the communication interface portion 300 of the controller 200 for the composite image forming apparatus 1 are bus masters.

Since two masters cannot simultaneously be exist on one bus, arbitration is performed at a first access from each master. A CPU, which is a winner of the arbitration, is made to be the bus master having the exclusive right to use the bus. The bus master having the exclusive right instructs a bus slave, that is, the large-capacity storage unit 400 or the other communication interface 109 or 300 in this embodiment, and then starts making an access. The access from the bus master is mainly classified into a command to control the bus slave and an access for communication of data with the bus slave. When the access is completed, acknowledge (status) information is returned from the bus slave to the bus master. Thus, the bus master recognizes whether the access successful or unsuccessful.

In this embodiment, a SCSI is employed as an example of the communication interface. However, the communication interface according to the present invention is not limited to the SCSI. Any communication interface satisfying the above-mentioned communication protocol may be employed.

As the large-capacity storage unit 400, a hard disk is employed in this embodiment. Also the large-capacity storage unit according to the present invention is not limited to the hard disk. A unit, for example, an optical disk having a large storage capacity may be employed.

The structure using the SCSI, which is a representative communication interface, will specifically be described. Note that the communication interface according to the present invention is not limited to the SCSI.

Data lines of the SCSI consist of eight data lines and one parity line. Control lines of the SCSI are composed of REQ (Request), ACK (Acknowledge), MSG (message), SEL (Select), C/D (Control/Data), I/O (Input/Output), BSY (Busy), ATN (Attention) and RST (Reset).

The communication protocol will now be described with reference to the states of the foregoing signals.

In the present invention, communication is performed among the composite image forming apparatus 1, the controller 200 for the composite image forming apparatus 1 and the hard disk (large capacity storage unit) 400.

SCSI ID is assigned to each of the composite image forming apparatus 1, the controller 200 for the composite image forming apparatus 1 and the hard disk (large-capacity storage unit) 400. The ID is assigned exclusively to a device on the same SCSI bus and the same ID does not exists on the same SCSI bus.

When communication is performed through the SCSI, the communication starts in a state where any device does not use the SCSI bus, that is, in a bus free phase in which any one of the above-mentioned signals is not in an active state.

In the above-mentioned state, a device attempted to use the bus drives a BSY signal to output the SCSI ID of the device to the data line. In the present invention, the device capable of exclusively using the bus is the composite image forming apparatus 1 or the controller 200 for the composite image forming apparatus 1. If the two devices require to exclusively use the bus, each device drives the BSY signal and outputs the SCSI ID of each device to the data line.

In this case, a device having a large SCSI ID wins and the device having the larger ID has the exclusive right to use the bus. This phase is called an "arbitration phase". The device which is the winner of the arbitration phase is hereinafter called an "initiator". The device which has lost the arbitration phase immediately stops driving the SCSI ID and the BSY signal of the device.

The initiator drives the SEL signal to determine a device to which the connection will be established, the phase is brought to a selection phase. Then, the initiator outputs the SCSI ID of the device and the SCSI ID of the device to which the connection will be established to the SCSI bus and interrupts the drive of the BSY signal.

On the other hand, when the selected device has recognized output of the SCSI ID of the device to the SCSI bus, the selected device responses to this by driving the BSY signal. The device selected by the initiator is hereinafter called a "target". When the BSY signal is responded, the initiator interrupts the drive of the SEL signal and stops the selection phase. At this time, the connection between the initiator and the target has been established.

Then, an information transfer phase starts. The foregoing phase is composed of a command phase, a data phase, a status phase and a message phase.

The command phase is a phase for transferring a command from the initiator to the target. Signals in this phase are made such that a C/D signal is activated and an I/O signal is not activated (the I/O signal indicates a transference direction such that it indicates transference from the target to the initiator when it is activated and transference from the initiator to the target when it is not activated). Only commands relating to the operations of the SCSI device are transferred in the foregoing phase.

All of commands (for example, a command to operate the printer) relating to the operation of the composite image forming apparatus 1 are, in the data phase, treated as data sequence on the SCSI. That is, if the target is the hard disk 400, the commands are, in this phase, read, write and head seek commands specified with the SCSI.

In the data phase, image data, internal information of the composite image forming apparatus 1 and operation parameters are transmitted. In the message phase in which an MSG signal is driven, the bus is managed between the initiator and the target. In the status phase, a transfer status is transmitted from the target to the initiator.

A communication passage assumed in the present invention and data which is communicated through the communication passage will now be described in such a manner that also their correspondence will be described.

Initially, communication from the controller 200 for the composite image forming apparatus 1 to the composite image forming apparatus 1 will now be described.

In this case, the initiator is the controller 200 for the composite image forming apparatus 1 and the target is the composite image forming apparatus 1. As a first example, a command to transfer image data is, in the command phase, issued by the controller 200 for the composite image forming apparatus 1, which is the initiator. In a next data phase, image data is transferred to the composite image forming apparatus 1.

As a second example, a command to transfer a control parameter is, in the command phase, issued by the controller 200 for the composite image forming apparatus 1, which is the initiator. In a next data phase, a control parameter for the composite image forming apparatus 1 is transferred. The control parameter is a data sequence with which the actual operation of the composite image forming apparatus 1 is described. Specifically, the control parameter is used to operate the printer or instruct to perform facsimile transmission.

The communication passage from the controller 200 for the composite image forming apparatus 1 to the hard disk 400 will now be described. Only image data is stored in the hard disk 400. That is, the foregoing operation is the same as a usual access to a hard disk through the SCSI. A command to control a hard disk specified with the SCSI is issued from the controller 200 for the composite image forming apparatus 1, which is the initiator. Image data is transferred in the data phase.

The communication passage from the hard disk 400 to the composite image forming apparatus 1 will now be described.

A similar operation to the above-mentioned case is performed. In this case, the initiator is the composite image forming apparatus 1. Therefore, image data stored in the hard disk 400 can be shared between the composite image forming apparatus 1 and the controller 200 for the composite image forming apparatus 1 through the hard disk 400. Image data received by the facsimile communication and image data input in the case where the composite image forming apparatus 1 has been used as the scanner are finally stored in the hard disk 400.

The communication passage from the composite image forming apparatus 1 to the controller 200 for the composite image forming apparatus 1 will now be described.

As an example, an internal status conversion relating to the composite image forming apparatus 1 is transmitted from the composite image forming apparatus 1, which is the initiator, to the controller 200 for the composite image forming apparatus 1 which is the target. Also in this case, a command to transmit internal information of the composite image forming apparatus 1 is, in the command phase, issued by the initiator. In a next data phase, a data sequence of internal information of the composite image forming apparatus 1 is transferred to the target.

A load dispersion process will now be described. In this case, the controller 200 for the composite image forming apparatus 1 is connected to the composite image forming apparatus so that a composite image forming system is formed.

An assumption is made that a plurality of computers (personal computes), a plurality of composite image forming systems and network printers are connected to one another on the same network. Control software called a "composite image forming manager" is executed in each personal computer.

When printing is instructed from a user by operating the personal computer, data to be printed is controlled by the composite image forming manager. The user is able to output a print from any one of arbitrary printers or (the composite image forming apparatus 1) among the composite image forming systems on the network. The foregoing operation can be performed by operating the composite image forming manager.

If image data required to be printed is not subjected to any image process (for example, a synthesizing process or a rotating process), the composite image forming manager transfers image data to an instructed printing unit (the network printer or the composite image forming apparatus 1).

In this case, the composite image forming system is similar to the conventional network printer and cuing of image data is performed in each printing unit.

In a case where image data is subjected to an image process before it is output, the user instructs the printing unit from which is print is output to the composite image forming manager, similarly to the foregoing case. However, the user does not instruct the composite image forming apparatus 1 in which image data is subjected to the image process. That is, the user does not regard the composite image forming system in which image to be printed is subjected to the image process.

Selection of (the composite image forming apparatus 1 in) the composite image forming system is performed by the composite image forming system. When a demand to print image data which must be subjected to an image process is issued from a personal computer on the network, the composite image forming manager for managing the network inquires the load of the composite image forming systems on the network. Image data is transferred to a composite image forming system having the lightest load among the composite image forming systems which have replied to the inquiry. In this case, image data is not simply transmitted. Image data provided with a header is transmitted.

The header has information of the printing unit to which data to be output is input, pages to be printed and the total number of pages to be printed. In accordance with the header, the composite image forming system subjects supplied image data to the image process, and then finally transfers the same to the printing unit which prints image data above.

Image data is transferred in units of one page in principle. After image data subjected to the image process has been transferred to the printing unit printing unit, the printing operation is started. That is, in the case where image data subjected to the image process is printed, the composite image forming system on the network and the pages which are transferred to the composite image forming system are disregarded. In this case, image data subjected to the image process in any one of the composite image forming systems on the network is transferred to the instructed printing unit (the network printer or one of the composite image forming apparatuses 1) so as to be rearranged.

In a case where the composite image forming system on the network has been exclusively used by a user and the composite image forming system must bear a very heavy load, the composite image forming manager does not immediately start transferring image data but again inquires of the network the load after a lapse of a predetermined time because the composite image forming manager is able to recognize the heavy load state when it has inquired the load through the network. Then, the composite image forming manager, in page units, transfers image to a composite image forming system having a light load. The inquiry of the load is performed in page units.

Although transference is, in principle, performed in page units, for example, 2-in-1 can effectively be transferred when image data is output in units of two pages.

The structure for establishing the connection between the composite image forming apparatus 1 and the controller 200 for the composite image forming apparatus 1 will now be described.

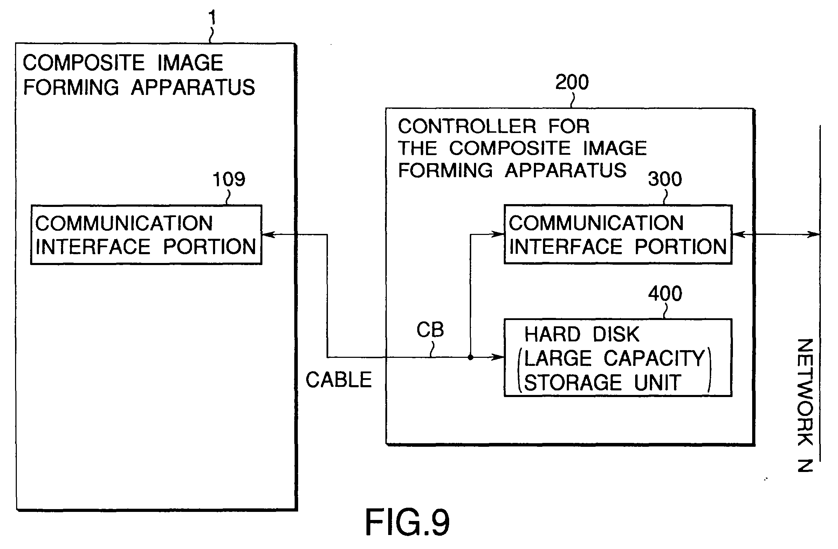

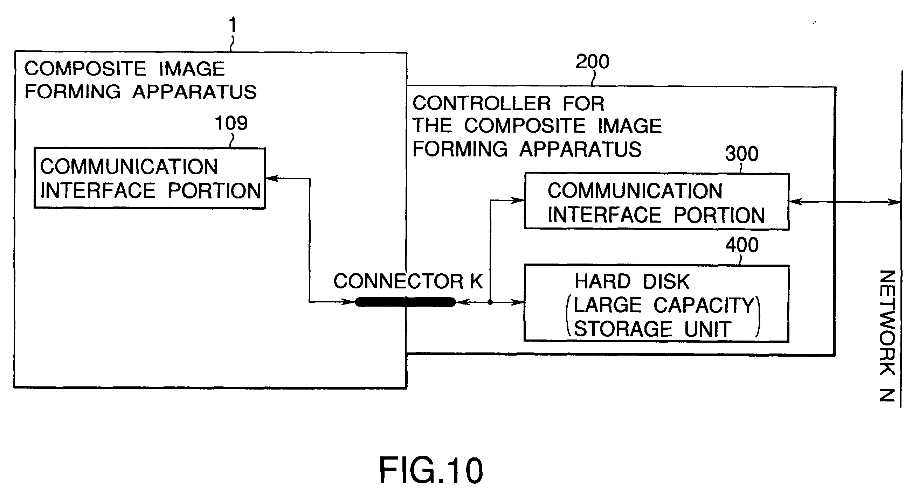

The composite image forming apparatus 1 and the controller 200 for the composite image forming apparatus 1 respectively have male and female connectors. Therefore, the composite image forming apparatus 1 and the controller 200 for the composite image forming apparatus 1 can be disposed apart from each other while being connected by the predetermined cable CB, as shown in FIG. 9. Since the male and female connectors are employed, the composite image forming apparatus 1 and the controller 200 for the composite image forming apparatus 1 can be disposed integrally, as shown in FIG. 10.

As described above, two types of system structures can be provided to be selected to be suitable to the allowed space. The foregoing structure is arranged for the purpose of enabling the user to relatively freely determine the positions when the user places the composite image forming apparatus 1 for the existing network.

Even if the structure is changed, the communication interface between the composite image forming apparatus 1 and the controller 200 for the composite image forming apparatus 1 is not affected adversely.

The case where communication is performed in the above-mentioned structure will now be described.

Internal information (for example, an information indicating a fact that a user is using the composite image forming apparatus 1) of the composite image forming apparatus 1 is important information when the controller 200 for the composite image forming apparatus 1 controls the composite image forming apparatus 1 from outside.

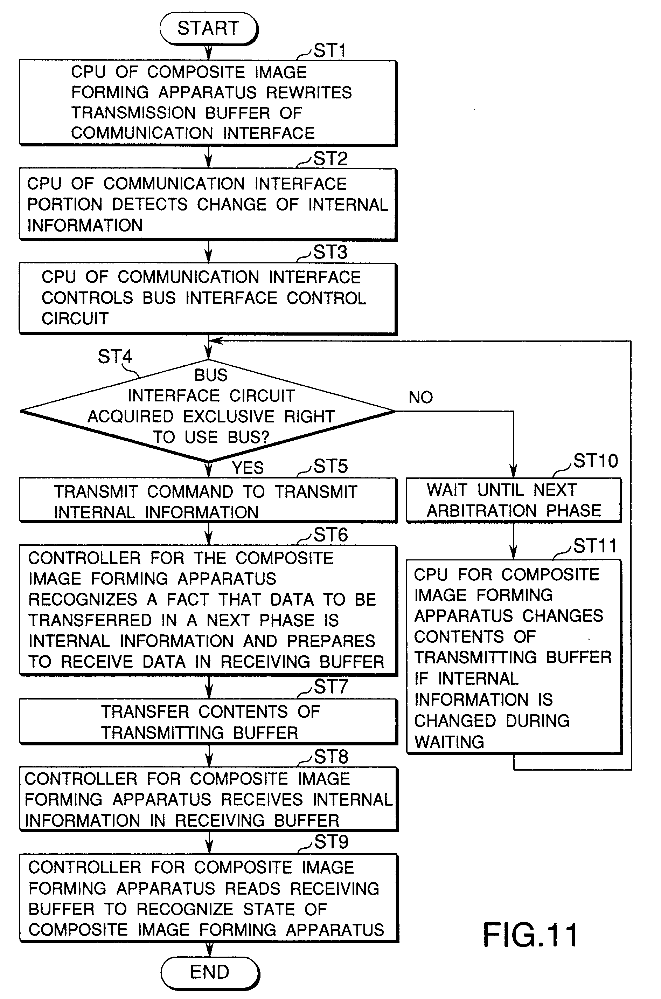

Referring to a flow chart shown in FIG. 11, the procedure for transferring internal information of the composite image forming apparatus 1 will now be described.

The CPU 100 of the composite image forming apparatus 1 always monitors the internal state of the composite image forming apparatus 1. If change occurs, the CPU 100 writes information indicating the change on the transmitting buffer DRAM 109f of the communication interface portion 109 (ST1), and then communicates the change of the internal state to the CPU 109a of the communication interface portion 109 (ST2).

The CPU 109a, which has received information above, controls the bus-interface control circuit 109d (ST3).

The operation of the SCSI bus is performed such that the initially arbitration phase is performed, and then the CPU 109a of the communication interface portion 109 wins the arbitration so that it is made to be the initiator having the exclusive right to use the bus (ST4). Then, the bus master, in the selection phase, instructs a unit (the target) to which the connection is established. After the connection has been established, the bus master transmits a control command to the connected unit in the command phase, and communicates data in the data phase. Then, status in response to the control command is returned from the target in the message phase, and then status indicating whether the transference has been performed successfully or unsuccessfully is returned in the status phase. Thus, the transference is completed.

In the present invention, the contents written on the transmitting buffer DRAM 109f, that is, internal information of the composite image forming apparatus 1 after the change has occurred is, in the data phase of the SCSI, transferred to the controller 200 for the composite image forming apparatus 1 (ST7).

The CPU 300a of the communication interface portion 300 of the controller 200 for the composite image forming apparatus 1, in the command phase, detects a command (ST5) issued from the CPU 109a of the communication interface portion 109 of the composite image forming apparatus 1 and indicating transmission of the internal information of the composite image forming apparatus 1 to prepare for storing internal information of the composite image forming apparatus 1, which is transferred in the following data phase, in the receiving buffer DPRAM 300g (ST6).

Then, the controller 200 for the composite image forming apparatus 1 causes transferred and changed internal information of the composite image forming apparatus 1 to be received by the receiving buffer DPRAM 300g of the communication interface portion 300 (ST8).

If the device loses the arbitration (ST4), it waits for completion of the access of the other initiator and again attends the bus arbitration (ST10 and 11).

Thus, the CPU 200a of the controller 200 for the composite image forming apparatus 1 is able to, in an arbitrary period of time, detect the state of the composite image forming apparatus 1 by reading the receiving buffer DPRAM 300g of the communication interface portion 300 through the control bus B5 (ST9).

If the device loses the arbitration and thus the communication interface portion 109 of the composite image forming apparatus 1 waits for the participation in a next arbitration, the CPU 100 of the composite image forming apparatus 1 is able to write new internal information on the transmitting buffer DRAM 109f (ST11).

Moreover, data to be transmitted, that is, internal information of the composite image forming apparatus 1 can be changed during a period in which the device waits for acquirement of the exclusive right of the SCSI bus. The CPU 109a of the communication interface portion 109 of the composite image forming apparatus 1 handles, as one demand for transference, two or more continued demands to transfer internal information during the period in which the exclusive right to use the bus is waited for. Thus, latest internal information of the composite image forming apparatus 1 can be transferred.

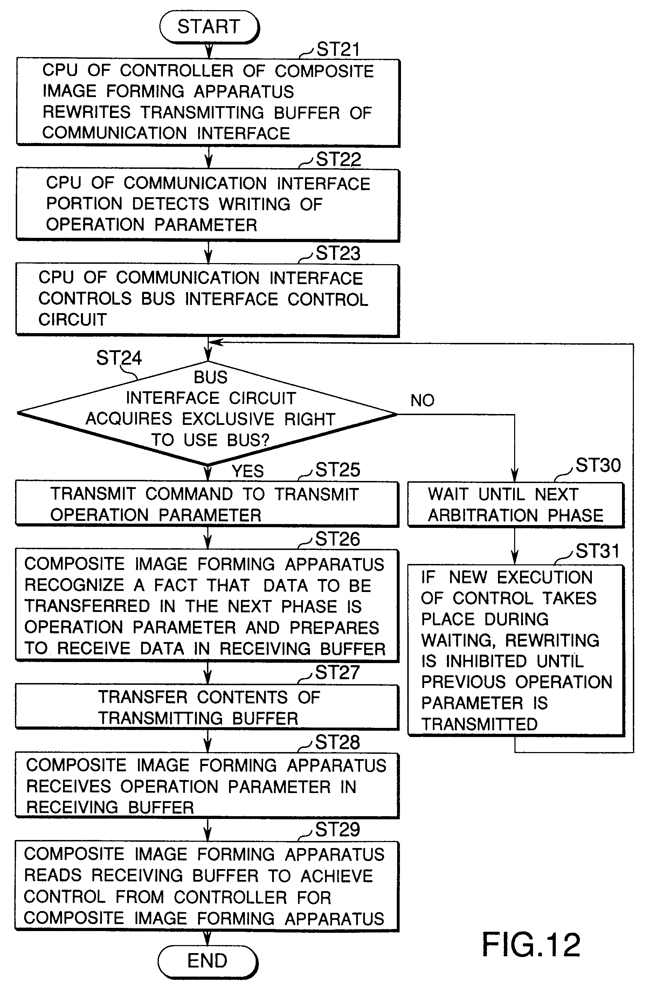

A procedure for transferring the operation parameter for controlling the composite image forming apparatus 1 from the controller 200 for the composite image forming apparatus 1 will now be described with reference to a flow chart shown in FIG. 12.

Information for controlling the composite image forming apparatus 1 is transferred from the controller 200 for the composite image forming apparatus 1. Information for controlling the composite image forming apparatus 1 is, for example, the size of paper, the number of original document sheets, instruction of 2in1, 4in1, that of rotation, the reduction ratio, the enlargement ratio, instruction of sorting and that of stapling.

Also the method for transferring information for controlling the composite image forming apparatus 1 is similar to that for transferring internal information of the composite image forming apparatus 1. Then, information for controlling the composite image forming apparatus 1 is hereinafter called an operation parameter.

The CPU 200a of the controller 200 for the composite image forming apparatus 1 writes control information on the transmission buffer DPRAM 300f of the communication interface portion 300 (ST21), and then communicates writing to the CPU 300a of the communication interface portion 300.

The CPU 300a of the communication interface portion 300 detects writing of the operation parameter (ST22), controls the bus-interface control circuit 300d (ST23), attends the arbitration phase (ST24), and acquires the exclusive right to use the bus. Then, the CPU 300a instructs the communication interface portion 109 of the composite image forming apparatus 1 in the selection phase, and then transmits a command to transmit the operation parameter (ST25).

The CPU 109a, which has received the command to transfer the operation parameter, prepares for an operation for storing the operation parameter, which will be transferred, into the receiving buffer DRAM 109g (ST26).

The controller 200 for the composite image forming apparatus 1 starts transmitting the operation parameter (ST27). Thus, operation parameters are sequentially stored in the receiving buffer DRAM 109g of the communication interface portion 109 of the composite image forming apparatus 1 (ST28).

If the devices loses the arbitration (ST24), completion of an access made by another initiator is waited for, and then participates in a next bus arbitration (ST30 and 31).

Data on the transmission buffer DPRAM 300f of the communication interface portion 300 of the controller 200 for the composite image forming apparatus 1, that is, the operation parameter is not overwritten until it is transferred to the composite image forming apparatus 1. The foregoing arrangement is only a difference from the transference of internal information of the composite image forming apparatus 1 (ST31).

Handling of image data (sharing of file system) will now be described.

In this embodiment, the composite image forming apparatus 1, the controller 200 for the composite image forming apparatus 1 and the hard disk 400 are connected to one another by a daisy chain. Since the SCSI is able to form a multi-initiator system structure, the composite image forming apparatus 1 and the controller 200 for the composite image forming apparatus 1 are able to share image data files stored on the hard disk 400 if they have a common file system. Moreover, image data can directly be communicated between the composite image forming apparatus 1 and the controller 200 for the composite image forming apparatus 1.

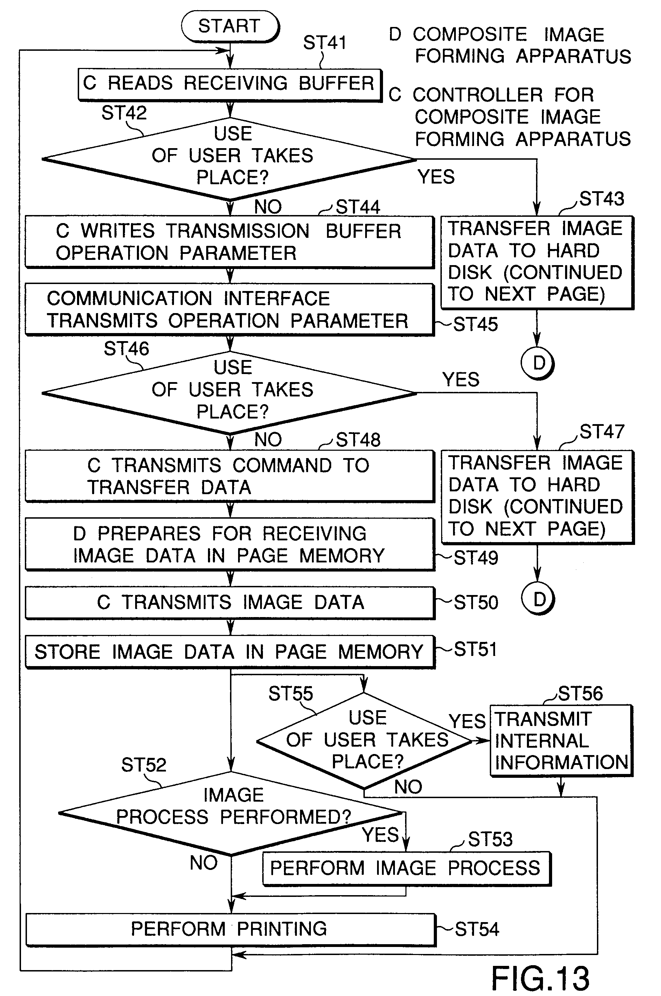

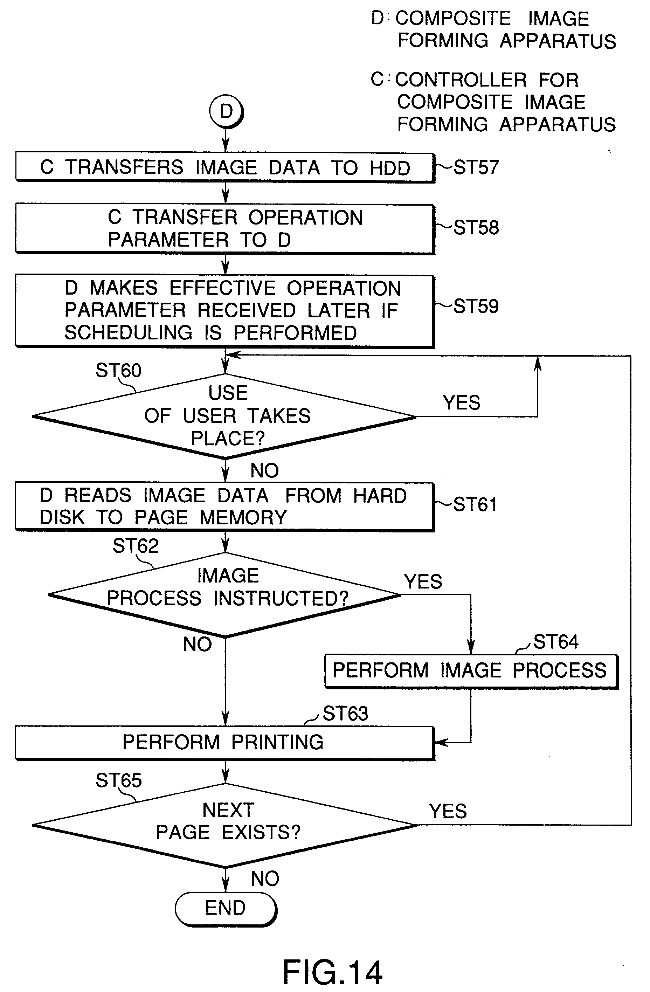

Referring to flow charts shown in FIGS. 13 and 14, the method of using image data according to the present invention will now be described. When the method of using image data is investigated, the present invention gives a priority to user's comfortable feeling during the operation of the composite image forming apparatus 1.

A case where the composite image forming apparatus 1 is used as the printer will now be described.

Referring to FIG. 13, the CPU 200a of the controller 200 for the composite image forming apparatus 1 reads the receiving buffer DPRAM 300g of the communication interface portion 300 (ST41) to confirm a fact that the composite image forming apparatus 1 is not being used by a user (ST42).

If use of the composite image forming apparatus 1 by the user is confirmed in the above-mentioned state (ST42), the controller 200 for the composite image forming apparatus 1 is operated to store image data in the hard disk 400 (ST43). Note that the method of control to perform the storage will be described later.

If the fact that the composite image forming apparatus 1 is not being used is confirmed (ST42), the CPU 200a writes the operation parameter of the composite image forming apparatus 1 on the transmission buffer DPRAM 300f (ST44).

The CPU 300a of the communication interface portion 300, which has recognized writing, controls the bus-interface control circuit 300d so that the CPU 300a is made to be the initiator and acquires the exclusive right to use the bus. Then, the CPU 300a transmits a command to transfer control device, and then transmits the operation parameter which is the content of the transmission buffer (ST45).

If the user uses the composite image forming apparatus 1 during this (ST46), the CPU 109a of the communication interface portion 109 of the composite image forming apparatus 1 is made to be the initiator. Thus, the CPU 109a transfers internal information of the composite image forming apparatus 1 by the above-mentioned method.

When use by the user is recognized (ST46), the CPU 100 of the composite image forming apparatus 1 outputs a command to store image data in the hard disk 400 to the CPU 109a of the communication interface portion 109 through the control bus B1. The CPU 109a of the communication interface portion 109 which has received the command controls the bus-interface control circuit 109d to become an initiator. Then, the CPU 109a acquires the exclusive right to use the bus, and then instructs the device with which the connection will be established to be the hard disk 400. In the command phase, the CPU 109a issues a command to write data to the hard disk 400. In the following data phase, the CPU 109a transfers image data to the hard disk 400 (ST47). Note that the method to control the foregoing operation will be described later.

If the fact that the user is not using the composite image forming apparatus 1 (ST46), the CPU 200a of the controller 200 for the composite image forming apparatus 1 transmits a command to transmit image data to the communication interface portion 300 (ST48). The CPU 300a of the communication interface portion 300, which has received the command, controls the bus-interface control circuit 300d to become the initiator. Then, the CPU 300a instructs the composite image forming apparatus 1 as a device with which the communication will be performed, and then transmits a command to transmit image data to the communication interface portion 109 of the composite image forming apparatus 1 (ST48).

The CPU 109a of the communication interface portion 109 of the composite image forming apparatus 1 recognizes a fact that image data is, in the next data phase, transferred from the controller 200 for the composite image forming apparatus 1, and then prepares to directly transfer image data to the page memory 112 through the control bus B1 (ST49).

Then, the CPU 300a of the communication interface portion 300 of the controller 200 for the composite image forming apparatus 1 starts transferring image data.

Transferred image data is allowed to pass through the communication interface portion 109 of the composite image forming apparatus 1, and then transferred to the page memory 112 through the control bus B1 of the composite image forming apparatus 1 (ST51) so that image data is printed (ST54).

If the operation parameter includes instruction to rotate, contract or enlarge image data (ST52), the foregoing functions are achieved on the page memory 112 (ST53).

If interrupting use of a user is attempted during this (ST55), the CPU 100, which is monitoring the state of the composite image forming apparatus 1, immediately changes internal information, and then communicates interrupting use by a user to the controller 200 for the composite image forming apparatus 1 (ST56). The CPU 100 repeats the above-mentioned operation for each page.

In order to realize comfortable feeling for the user to operate the composite image forming apparatus 1, the unit for transferring image data is made to be one page. That is, when the composite image forming apparatus 1 is used from outside, interruption by a user is permitted for one copy of the original document. When the editing function, such as 2in1 or electronic sorting, in which plurality of pages are subjected to the process, is performed, the hard disk 110 in the composite image forming apparatus 1 is used. Therefore, image data to be managed from outside may be handled in page units. Since image data is managed in page units when the printer is used from the outside of the composite image forming apparatus 1, mixture of different page sizes in the original document to be printed out is permitted.

Storage of image data in the hard disk 400 will now be described.

In a case where a user is permitted to use the composite image forming apparatus 1 during use of the composite image forming apparatus 1 from the outside as the printer (ST42 and 46), the controller 200 for the composite image forming apparatus 1 starts storing image data into the hard disk 400 (ST43 and 47).

That is, the CPU 300a of the communication interface portion 300 of the controller 200 for the composite image forming apparatus 1 is made to be the initiator, and then the CPU 300a instructs the hard disk 400 as the device with which the connection will be established and establishes the connection. Then, the CPU 300a transmits a command to write data to the hard disk 400, and then starts transferring image data. At this time, image data for all of the page is, in place of page units, transferred to the hard disk 400 (ST57). However, transferred image data for each page is formed into a file on the hard disk 400.

After image data has been formed into a file in the hard disk 400, the controller 200 for the composite image forming apparatus 1 transmits information, including the position of image data, to the composite image forming apparatus 1 as the operation parameter by the above-mentioned method (ST58).

If information in the receiving buffer DRAM 109g of the communication interface portion 109 is updated, the composite image forming apparatus 1 reads information indicating this to perform scheduling. In the present invention, scheduling is an operation to store, on the RAM 102 of the composite image forming apparatus 1, the operation parameter for controlling the composite image forming apparatus 1 supplied from the controller 200 for the composite image forming apparatus 1. That is, the operation parameter is not performed immediately.

Since image data which is processed by the operation parameter is not transmitted after the operation parameter has been transferred, the operation parameter is subjected to the scheduling process. That is, although the operation parameter is, by the CPU 100 of the composite image forming apparatus 1, read from the receiving buffer DRAM 109g of the communication interface portion 109 of the composite image forming apparatus 1 onto the RAM 102 through the control bus B1, it is not immediately executed but the same is brought to a waiting state.

The state where control parameter is transferred and image data is not transferred at the next transference, the foregoing state means a fact that the composite image forming apparatus 1 is being used by a user and image data from the controller 200 for the composite image forming apparatus 1 is transferred to the hard disk 400 and allowed to exist on the same.

When transference of image data for all pages to the hard disk 400 has been completed, the controller 200 for the composite image forming apparatus 1 again transfers the operation parameter to the composite image forming apparatus 1.

The operation parameter includes information indicating a fact that subject image data exists on the hard disk 400 and the number of copies.

When the CPU 100 of the composite image forming apparatus 1 has received a new operation parameter, the CPU 100 nullifies the previous control parameter and makes the latter operation parameter to be effective (ST59).

After the user has used the copying function of the composite image forming apparatus 1 (ST60), the CPU 100 of the composite image forming apparatus 1 reads image data for each page from the hard disk 400 onto the page memory 112 in accordance with the effective operation parameter (ST61), and then prints image data (ST63).

If a demand to perform an image process is described in the operation parameter (ST62), the CPU 100 performs the image process on the page memory 112 (ST64).

If interrupting use of the composite image forming apparatus 1 is required from a user during reading of image data from the hard disk 400, image data read to the page memory 112 is determined to be effective and the same is printed. Then, use of the composite image forming apparatus 1 is permitted for the user. At this time, reading of image data from the hard disk 400 and printing of the same are brought to a waiting state.

A case where the composite image forming apparatus 1 is used as an image conversion server will now be described.

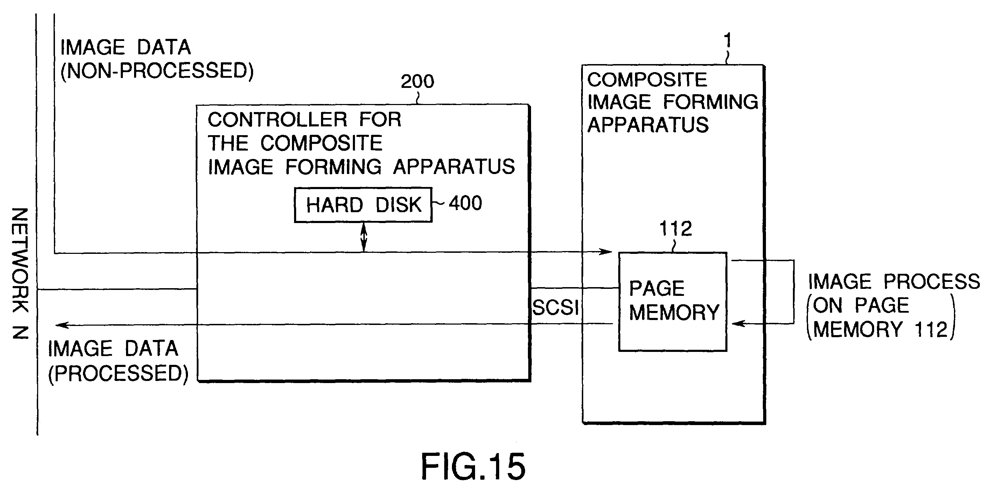

FIG. 15 shows a passage of data when the composite image forming apparatus 1 is used as the image conversion server.

The foregoing description has been made about the arrangement in which the composite image forming apparatus 1 is controlled from outside, that is, from the controller 200 for the composite image forming apparatus 1 so as to use the composite image forming apparatus 1 as the printer. Since the controller 200 for the composite image forming apparatus 1 has the interface with the network, use of the composite image forming apparatus 1 as the printer is use of the composite image forming apparatus 1 as the network printer.

Use of the composite image forming apparatus 1 and the controller 200 for the composite image forming apparatus 1 according to the present invention as the image conversion server is as follows.

The composite image forming apparatus 1 has a multiplicity of document editing functions which can be provided for image data on the page memory 112. By using the above-mentioned function, an arrangement may be employed in which image data is processed from the controller 200 for the composite image forming apparatus 1 and processed data is not output from the printer of the composite image forming apparatus 1 but the same is transferred to the controller 200 for the composite image forming apparatus 1.

When the controller 200 for the composite image forming apparatus 1 has recognized that the user is not using the composite image forming apparatus 1 by the above-mentioned method, the controller 200 for the composite image forming apparatus 1 initially transmits, to the composite image forming apparatus 1, an operation parameter indicating to serve as a server is transmitted to the composite image forming apparatus 1. Then, the controller 200 for the composite image forming apparatus 1 transmits image data.

Transmitted image data is subjected to a process, such as rotation, synthesis, enlargement or contraction on the page memory 112 of the composite image forming apparatus 1. Image data process in the composite image forming apparatus 1 is transferred to the controller 200 for the composite image forming apparatus 1.

If interrupting use is required from a user during the foregoing process, image data is temporarily stored in the hard disk 400 similarly to the above-mentioned process. After the user has stopped use of the composite image forming apparatus 1, the process of ensuing image data is continued.

By using the above-mentioned image conversion server, the peculiar editing function of the composite image forming apparatus 1 can be provided for the common printing unit (the network printer) existing on the conventional network.

To realize this, software called a composite image forming apparatus manager arranged to be executed on personal computers on the network is used. The above-mentioned software is able to operate similarly to a conventional print manager. In general, printing of an original document processed and edited on a personal computer is instructed from the software which has processed the original document. Generated bit data is managed by the print manager so as to be transferred to the printer from which the same is output.

In the present invention, the composite image forming apparatus manager, in place of the print manager, transfers image data to the controller 200 for the composite image forming apparatus 1 prior to transferring the same to a required printer. Thus, image data is processed by the composite image forming apparatus 1, and then transferred to the printer. Since the above-mentioned operation is managed by the composite image forming apparatus manager, user is not conscious of the difference from the conventional environment.

When the composite image forming apparatus 1 and the controller 200 for the composite image forming apparatus 1 are connected to each other on the network, the editing function of the composite image forming apparatus 1 can easily be added to the printing unit on the conventional network.

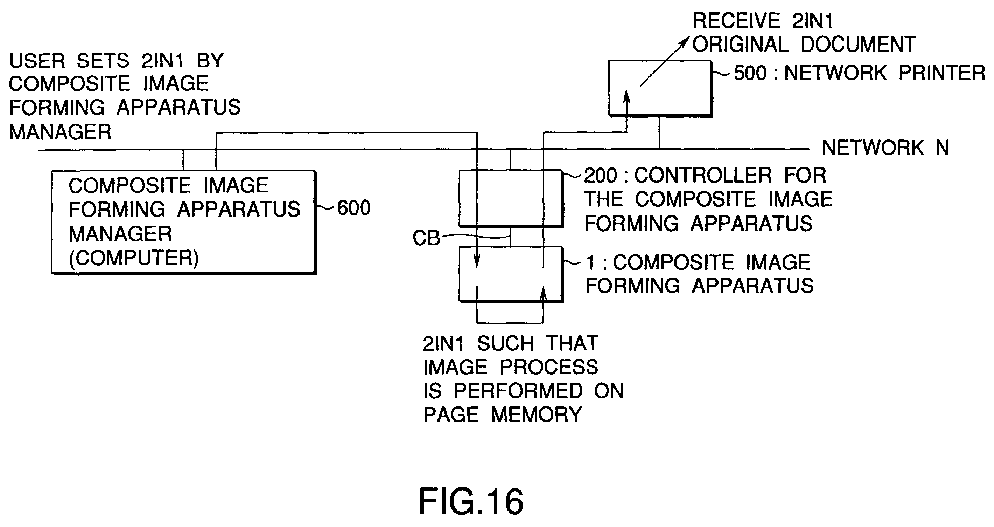

FIG. 16 shows an example of addition of a function to a network printer 500 using an image conversion server. The function "2in1" is set by the personal computer 600 by using the composite image forming apparatus manager. The image process "2in1" is performed in the page memory 112 of the composite image forming apparatus 1 through the controller 200 for the composite image forming apparatus 1 so that a 2in1 original document is obtained from the network printer 500.

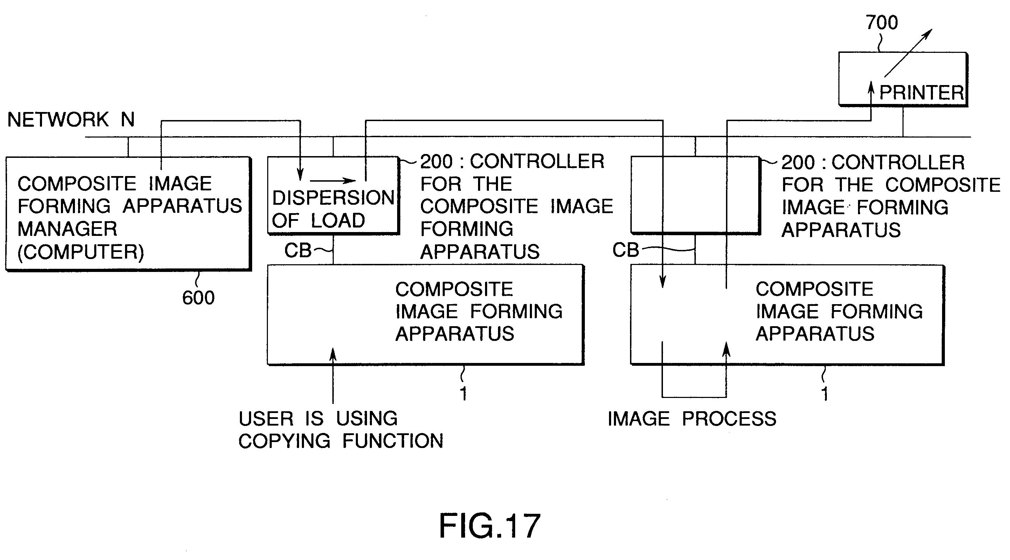

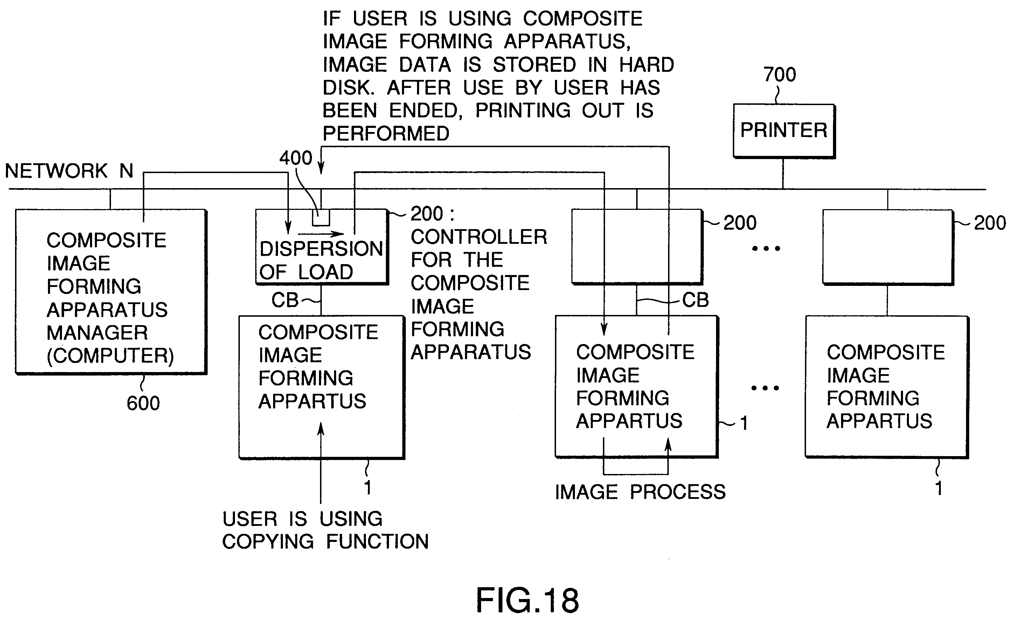

The load dispersion process will now be described with reference to FIGS. 17 and 18.

A combination of the composite image forming apparatus 1 and the controller 200 for the composite image forming apparatus 1 is called as a "composite image forming system". At least two composite image forming systems exist on the network. Moreover, a plurality of printers 700 and a plurality of computers (personal computers) 600 exist on the network.

An assumption is made that the edition function of the composite image forming apparatus 1 is used to output an original document from a certain personal computer 600 to a certain printer 700.

A user processes an original document by using software on the personal computer 600, and instructs to print the original document on the software. Then, the management of image data to be printed is shifted to the composite image forming apparatus manager which is being operated on the personal computer 600. The composite image forming apparatus manager transmits image data to a composite image forming apparatus 1 in page units.

If interrupting use of the subject composite image forming apparatus 1 is attempted by a user, or if a user is using the composite image forming apparatus 1 when the composite image forming apparatus manager is attempted to transmit image data, the composite image forming apparatus manager, at this time, transfers image data to a composite image forming system which is not being used by a user. Thus, image data is subjected to a required process, and then edited data is transferred to the printer 700 from which data will be output. Thus, the image conversion server can dynamically be changed.

A similar operation is performed in the case where the composite image forming apparatus 1 is used as a printer. If the required image forming system is being used by a user and an idle composite image forming system exists on the network, the edition function of the idle composite image forming system is used and image data subjected to the edition process is stored in the hard disk 400. Then, completion of the composite image forming apparatus 1 by the user is waited for (see FIG. 18).

Thus, the resources on the network can efficiently be used and the load which is applied on the composite image forming apparatus 1 can be dispersed.

A case where the composite image forming apparatus 1 is used as a scanner will now be described.

When the composite image forming apparatus 1 is used as a scanner, the user depresses a scanner mode button on the control panel 103 of the composite image forming apparatus 1 to switch the usual copying mode.

At this time, the CPU 100 in the composite image forming apparatus 1 transmits change in the internal information of the composite image forming apparatus 1 by the above-mentioned procedure and internal information to the controller 200 for the composite image forming apparatus 1. Internal information above includes information indicating a fact that the composite image forming apparatus 1 is used as a scanner by the user.

Image data of the original document scanned by the user is initially stored on the page memory 112. If edition of the original document is instructed from the user by using the control panel 103, read image data is processed on the page memory 112. By the above-mentioned procedure, image data is stored in the hard disk 400.

After the final original document has been read, the user depresses a scanning completion button on the control panel 103 to communicate completion of use of the scanner to the CPU 100 of the composite image forming apparatus 1.

The CPU 100 of the composite image forming apparatus 1 transmits communicated data indicating, for example, the number of sheets, to the controller 200 for the composite image forming apparatus 1.

The controller 200 for the composite image forming apparatus 1 stores information above and retains the same until it is read from the computer (a personal computer) 600, the printer 700 or another composite image forming apparatus 1 on the network.

When a demand to read information is issued from the network, the controller 200 for the composite image forming apparatus 1 reads data scanned previously from the hard disk 400 to output the same to the network.

A case where the composite image forming apparatus 1 is used as a facsimile apparatus will now be described.

When the facsimile transmission function of the composite image forming apparatus 1 is used from the controller 200 for the composite image forming apparatus 1, a similar operation to that when the composite image forming apparatus 1 is used as the printer is performed.

The difference lies in that information included in the operation parameter which is transmitted from the controller 200 for the composite image forming apparatus 1 includes information of instruction to perform facsimile transmission. The methods of transmitting and storing image data are the same as those of the above-mentioned operation.

Since the moment at which the facsimile receipt is performed cannot be expected, image data is temporarily stored in the hard disk 110 in the composite image forming apparatus 1 if the user is using the composite image forming apparatus 1. When the composite image forming apparatus 1 is not being used by a user or the network, received data is transmitted to the hard disk 400 similarly to the scanner operation. Moreover, a fact that received data exists is communicated to the controller 200 for the composite image forming apparatus 1.

When a demand to read received data is issued from the network, the controller 200 for the composite image forming apparatus 1 reads image data from the hard disk 400 so as to output read image data to the network.

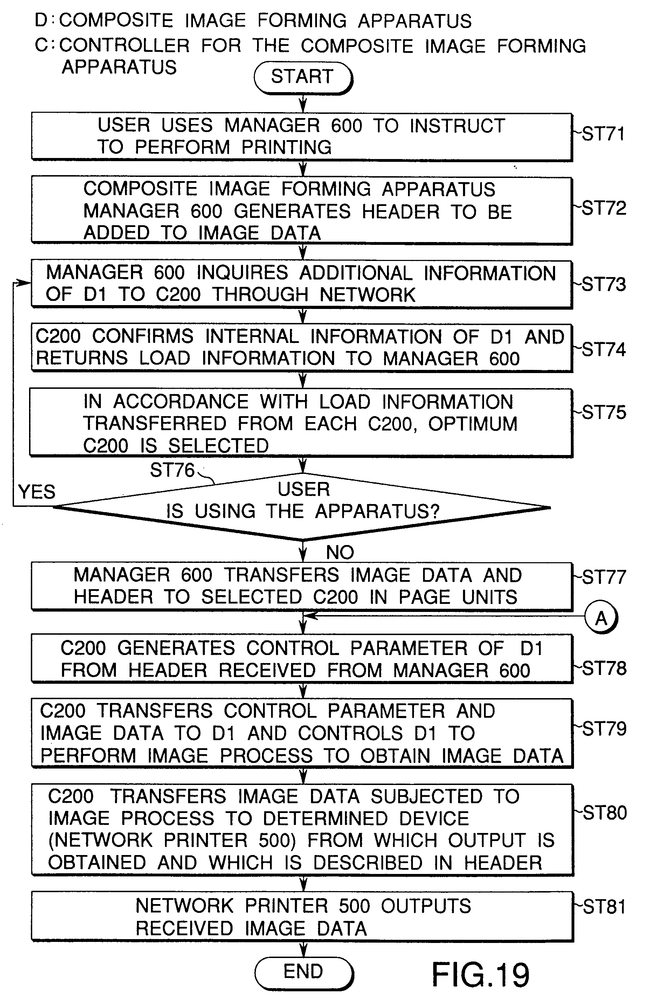

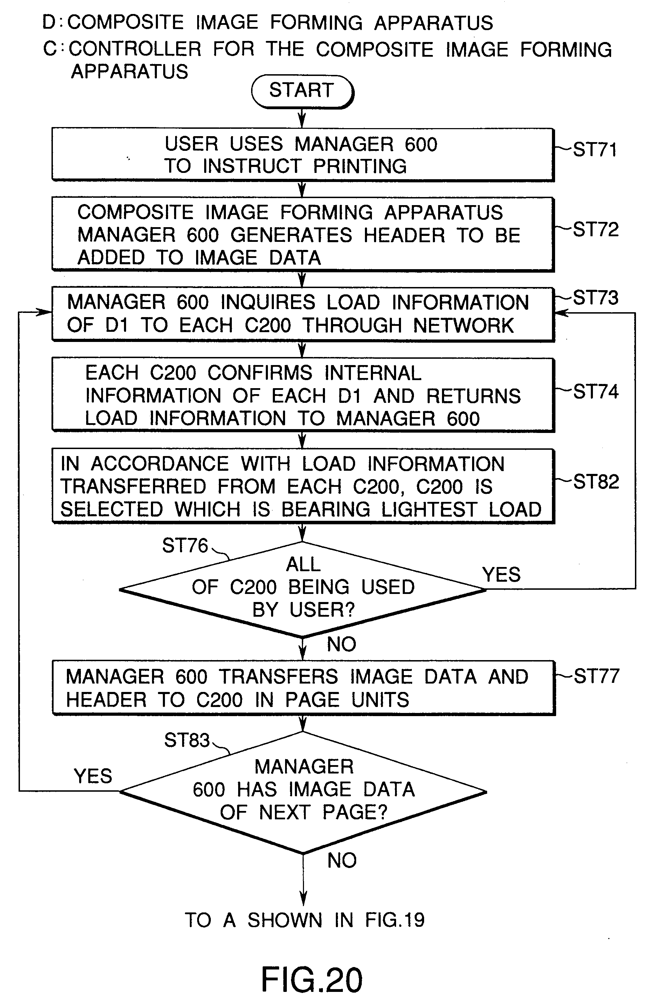

The above-mentioned load dispersion process will now be described with reference to a flow chart shown in FIGS. 19 and 20.

Referring to the flow chart shown in FIG. 19, a user of the system operates the composite image forming apparatus controller (usually it is a personal computer or a word processor) 600 to transmit image data to be printed and an instruction to perform printing (ST71). In response to this, the composite image forming apparatus manager 600 generates a header to be added to image data and adds the same to image data (ST72). Moreover, the composite image forming apparatus manager 600 inquires each composite image forming apparatus 1 on the network N each state of addition such that it transfers a command (ST73). On the other hand, each controller 200 for the composite image forming apparatus 1 confirms load information of the composite image forming apparatus 1 to transmit, to the composite image forming apparatus manager 600, load information and so forth through the network N (ST74). Load information and so forth includes information indicating whether or not a user of the composite image forming apparatus exists, the number of copy sheets set by the user, information of present number of copies and enabled image processes. By comparing and investigating each load information of each of the composite image forming apparatuses 1, an optimum composite image forming apparatus 1 corresponding to load information is selected (ST75). If a 2IN1 process is required, a composite image forming apparatus which has the above-mentioned processing function and which is not being used by a user is selected.

At this time, the composite image forming apparatus manager 600 confirms a fact that all of the controllers 200 for the composite image forming apparatus 1 are not being used by the user (ST76). Then, the composite image forming apparatus manager 600, in page units, transfers image data and the generated header to the controller 200 for the composite image forming apparatus 1 corresponding to the selected composite image forming apparatus 1 (ST77). If the controller 200 for the composite image forming apparatus 1 is being used, inquiry of load information is again performed.

The controller 200 for the composite image forming apparatus 1, which has received image data and the header from the composite image forming apparatus manager 600 through the network N, generates a control parameter for the composite image forming apparatus 1 from the header (ST78). Thus, the controller 200 for the composite image forming apparatus 1 controls the composite image forming apparatus 1, transfers image data onto the page memory of the composite image forming apparatus, performs an instructed image process (for example, 2IN1 in the example shown in FIG. 16), and then returns image data to the controller 200 for the composite image forming apparatus 1 (ST79). The controller 200 for the composite image forming apparatus 1, which has received returned image data subjected to the image process, transfers data subjected to the image process to the device 500 to which output will be supplied, which has been described in the header and which has been communicated from the composite image forming apparatus manager 600 (ST80).

The printer 500, to which image data will be transferred, receives image data above, and then prints the same (ST81). As a matter of course, a case where the composite image forming apparatus is used as the printer is included in this description as well as the case in which the exclusive printer is used.

ST71 to ST74, ST76 and ST77 shown in FIG. 20 are similar to those shown in FIG. 19. Therefore, similar portions are omitted from description, and only different portions will now be described. Referring to the flow chart, the composite image forming apparatus manager 600, in step ST83, selects an optimum composite image forming apparatus 1 in accordance with each load information items supplied from each of the controllers 200 for the composite image forming apparatus 1 and in consideration of the contents of the required image process and so forth (ST83). As one of selection methods in this case, a method may be employed in which a composite image forming apparatus of the controller 200 for the composite image forming apparatus 1 from which the reply has been performed most quickly is determined to be the optimum composite image forming apparatus. If a reply has been made from all of the controllers 200 for the composite image forming apparatus 1, a command to inquire the load is transmitted to each of the controllers 200 for the composite image forming apparatus 1.

If the composite image forming apparatus manager 600 has image data of a next page, inquiry to each of the controllers 200 for the composite image forming apparatus 1 is performed whenever existence is detected so as to transmit the image to an optimum composite image forming apparatus (ST83).

The selection methods described in steps ST75 and ST82 may be varied. For example, a method may be employed in which a plurality of composite image forming apparatuses, which have been instructed, are set to be adaptable to the contents of the image process and selection is performed in accordance with the range of the composite image forming apparatuses and obtained load information.

Moreover, a printing process to be performed after an image process has been performed may be carried out such that an appropriate composite image forming apparatus and a printer are selected in accordance with load information to print image data.

As described above, according to the present invention, the communication method among the composite image forming apparatuses is defined so that the printing, scanner and facsimile functions of the composite image forming apparatus are provided for the conventional network mainly formed by personal computers and printers. Moreover, the image edition function of the composite image forming apparatus can be added to the conventional network printer.

Although the composite image forming apparatus provides the above-mentioned functions for the network, the communication method is formed such that a priority is given to the copying function for a user. Therefore, the system can be used with maintaining the handling facility of the copying function. Moreover, the communication method according to the present invention is able to disperse the load of the image process which must be borne by one composite image forming apparatus on the network. Therefore, the resource on the network can efficiently be distributed.

As described above, according to the present invention, an image forming system and an image forming process control method can be provided with which the copying function can easily be used by a user and control of the function of the image forming apparatus can efficiently be performed from the network.

## Claims

1. An image forming system comprising:
a first image forming apparatus (500) for forming an image in accordance with image data so as to form image,
second image forming apparatuses (1,..., 1) for performing a predetermined image process in accordance with image data so as to form an image;
means (CB, N) for establishing a connection among a host computer (600) for controlling an operation of the system, the first image forming apparatus and the second image forming apparatuses; and
control means (200, 600, S71 to S83) for receiving a demand to perform a predetermined process and image to be processed, selecting one image forming apparatus from the first image forming apparatus and the second image forming apparatuses in accordance with states of the first image forming apparatus and the second image forming apparatuses and controlling the selected image forming apparatus so as to process the image to be processed corresponding the predetermined process demand.

2. An image forming system according to claim 1, characterized in that the control means includes
predetermined processing means (ST79) for causing the selected image forming apparatus to subject the image to be processed to a predetermined process corresponding to the predetermined process demand so as to output a processed image; and
second control means (ST80, 81) for further selecting one image forming apparatus from the first image forming apparatus and the second image forming apparatuses in accordance with the states of the first image forming apparatus and the second image forming apparatuses, and causing the selected image forming apparatus to form an image in accordance with the processed image.

3. An image forming system according to claim 2, characterized in that the predetermined processing means includes
means (ST79) for causing the selected image forming apparatus to subject the image to be processed to any one of a 2in1 process, a 4in1 process and a rotation process corresponding to the predetermined process demand, so as to output the processed image.

4. An image forming system according to claim 1, characterized in that the control means includes
second control means (ST79) for causing the selected image forming apparatus to form an image corresponding to the predetermined process demand in accordance with the processed image.

5. An image forming system according to claim 1, characterized in that the control means includes
means (ST79) for causing the selected image forming apparatus to subject the image to be processed to any one of a 2in1 process, a 4in1 process and a rotation process corresponding to the predetermined process demand so as to output the processed image.

6. An image forming system according to claim 1, characterized in that the control means includes
means (200, 200, ST74), respectively disposed among the connection means, the first image forming apparatus and the second image forming apparatuses, for receiving a signal supplied from the host computer corresponding to the predetermined process demand, and detecting a state of each of the first image forming apparatus and the second image forming apparatuses so as to transfer results of detection to the host computer.

7. An image forming system according to claim 1, characterized in that the control means includes
means (200, 200, ST74), having an end connected to the connection means and another end connected to the first image forming apparatus and the second image forming apparatuses by a daisy chain manner, for receiving a signal supplied from the host computer corresponding the predetermined process demand and detecting a state of each of the first image forming apparatus and the second image forming apparatuses so as to transfer results of detection to the host computer.

8. An image forming system according to claim 1, characterized in that the control means includes
means (600, ST72) for generating header information to be added to image to be processed corresponding to the predetermined process demand;
means (600, ST73) for outputting an instruction signal to detect a state of each of the first image forming apparatus and the second image forming apparatuses corresponding to the predetermined process demand;
means (200, 1, ST74) for receiving the instruction signal to detect a state of each of the first image forming apparatus and the second image forming apparatuses so as to output a result of each detection;
means (ST75) for selecting one image forming apparatus from the first image forming apparatus and the second image forming apparatuses in accordance with the result of each detection;
supply means (600, ST77) for supplying header information and the image to be processed to the selected image forming apparatus;
means (200, ST78) for generating a control parameter in accordance with header information;
means (200, ST79) for causing the selected image forming apparatus to subject the image to be processed to a process corresponding to the demand to perform the process in accordance with the control parameter; and
means (200, 500, ST80, ST81) for outputting the processed image to the other one (500) of the first image forming apparatus and the second image forming apparatuses and causing the other one of the image forming apparatuses to form an image in accordance with the processed image.

9. An image forming system according to claim 8, characterized in that the supply means includes
means (600, ST77) for, in a quantity for one page, sequentially supplying header information and the image to be processed which have been selected by the selecting means.

10. An image forming system according to claim 8, characterized in that the supply means includes
a had disk (200, 400) for storing the image to be processed; and
means (200, 400) for storing the image to be processed in the hard disk to bring the image to be processed to a standby state in a case where the selected image forming apparatus is being used.

11. An image forming system according to claim 1, characterized in that the control means includes
means (200, 600, ST75) for detecting the functions of the first image forming apparatus and the second image forming apparatuses so as to select the image forming apparatus having the function capable of the predetermined process demand.

12. An image forming system according to claim 1, characterized in that the control means includes
means (200, 600, ST82) for detecting a state of use of each of the first image forming apparatus and the second image forming apparatuses so as to select the image forming apparatus which is bearing the lightest load.

13. An image forming system according to claim 1, characterized in that the control means includes
means (600, ST75) for inquiring a state to the first image forming apparatus and the second image forming apparatuses so as to select the image forming apparatus from which a reply has been made most quickly.

14. An image forming method comprising the steps of:
a step (CB, N) of establishing the connection among a first image forming apparatus (500) for forming an image in accordance with image data so as to form an image; second image forming apparatuses (1,..., 1) for performing a predetermined image process in accordance with image data so as to form an image; and a host computer (600) for controlling an operation of the system in such a manner that communication is permitted; and
a control step (S71 to S83) of receiving an issued demand to perform a predetermined process and an image to be processed, selecting one image forming apparatus from the first image forming apparatus and the second image forming apparatuses in accordance with the states of the first image forming apparatus and the second image forming apparatuses and causing the selected image forming apparatus to process the image to be processed corresponding to the predetermined process demand.

15. An image forming method according to claim 14, characterized in that the control step includes
a predetermined process step (ST79) of causing the selected image forming apparatus to subject the image to be processed to a predetermined process demand so as to output a processed image; and
a second control step (ST80, ST81) of further selecting one image forming apparatus from the first image forming apparatus and the second image forming apparatuses in accordance with the states of the first image forming apparatus and the second image forming apparatuses to cause the selected image forming apparatus so as to form an image in accordance with the processed image.

16. An image forming method according to claim 15, characterized in that the predetermined process step include
a step (ST79) of causing the selected image forming apparatus to subject the image to be processed to any one of a 2in1 process, a 4in1 process and a rotation process corresponding to the predetermined process demand so as to output the processed image.

17. An image forming method according to claim 14, characterized in that the control step includes
a second control step (ST79) of causing the selected image forming apparatus to form an image corresponding to the predetermined process demand in accordance with the processed image.

18. An image forming method according to claim 14, characterized in that the control step includes
a step (ST79) of causing the selected image forming apparatus to subject the image to be processed to any one of a 2in1 process, a 4in1 process and a rotation process corresponding to the predetermined process demand so as to output the processed image.

19. An image forming method according to claim 14, characterized in that the control step includes
a step (ST74) of performing control by using controllers respectively disposed among the connection means, the first image forming apparatus and the second image forming apparatuses, arranged to receive a signal supplied from the host computer corresponding to the predetermined process demand and to detect a state of each of the first image forming apparatus and the second image forming apparatuses so as to transfer results of detection to the host computer.

20. An image forming method according to claim 14, characterized in that the control step includes
a step (ST74) of performing control by using a controller having an end connected to the connection step and another end connected to the first image forming apparatus and the second image forming apparatuses by a daisy chain manner, arranged to receive a signal supplied from the host computer corresponding to the predetermined process demand and to detect a state of each of the first image forming apparatus and the second image forming apparatuses so as to transfer results of detection to the host computer.

21. An image forming method according to claim 14, characterized in that the control step includes
a step (ST72) of generating header information to be added to the image to be processed corresponding the predetermined process demand;
a step (600, ST73) of outputting an instruction signal to detect the states of the first image forming apparatus and the second image forming apparatuses corresponding to the predetermined process demand;
a step (200, 1, ST74) of receiving the instruction signal to detect the state of each of the first image forming apparatus and the second image forming apparatuses so as to detect a result of each detection;
a step (ST75) of selecting one image forming apparatus from the first image forming apparatus and the second image forming apparatuses in accordance with the result of each detection;
a supply step (ST77) of supplying header information and the image to be processed to the image forming apparatus selected in the selection step;
a process (200, ST78) of generating a control parameter in accordance with header information;
a step (200, ST79) of causing the selected image forming apparatus to subject the image to be processed a process corresponding to the predetermined process demand in accordance with the control parameter; and
a step (ST80, ST81) of outputting the processed image to the other one of the first image forming apparatus and the second image forming apparatuses to cause the other image forming apparatus to form an image in accordance with the processed image.

22. An image forming method according to claim 21, characterized in that the supply step includes
a step (ST77) of sequentially supplying header information and the image to be processed in a quantity for one page to the image forming apparatus selected in the selecting step.

23. An image forming method according to claim 21, characterized in that the supply step includes
a step of storing the image to be processed in a hard disk to bring the same to a standby state in a case where the selected image forming apparatus is being used.

24. An image forming method according to claim 14, characterized in that the control step includes
a step (ST75) of detecting the functions of the first image forming apparatus and the second image forming apparatuses so as to select the image forming apparatus having the function capable of satisfying the demand to perform the predetermined process.

25. An image forming method according to claim 14, characterized in that the control step includes
a step (ST82) of detecting a state of use of each of the first image forming apparatus and the second image forming apparatuses so as to select the image forming apparatus which is bearing the lightest load.

26. An image forming method according to claim 14, characterized in that the control step includes
a step (ST75) of inquiring the state of the first image forming apparatus and the second image forming apparatuses to the first image forming apparatus and the second image forming apparatuses so as to select the image forming apparatus from which a reply has been performed most quickly.
